# EUROPEAN PATENT APPLICATION

(11) **EP 4 776 599 A1**
(43) Date of publication of application: **15.07.2026**
(21) Application number: 23958528.4
(22) Date of filing: 14.11.2023
(51) Int. Cl.: H04L 67/06

(54) **DATA TRANSMISSION METHOD, ELECTRONIC DEVICE AND STORAGE MEDIUM**

(71) Applicant: Honor Device Co., Ltd., Shenzhen, Guangdong 518040 (CN)
(72) Inventor: MA, Cong, Shenzhen, Guangdong 518040 (CN)
(74) Representative: Goddar, Heinz J.
(86) International application number: PCT/CN2023/131621
(87) International publication number: WO 2025/102246

(57) **Abstract**

This application provides a data transmission method, an electronic device, and a storage medium. The method includes: After an electronic device displays a thumbnail corresponding to a screenshot image or a screen recording video, a user drags the thumbnail to a hotspot of a target service and then releases the thumbnail, and the electronic device may transmit the screenshot image or the screen recording video to the target service. Through the data transmission method, convenient transmission of resource data between services can be implemented, thereby improving user experience.

## Description

### TECHNICAL FIELD

This application relates to the field of intelligent terminal devices, and in particular, to a data transmission method, an electronic device, and a storage medium.

### BACKGROUND

In modem life, an intelligent terminal such as a mobile phone has become an indispensable daily tool for people. In addition to a basic communication function, the intelligent terminal such as the mobile phone further provides a plurality of practical functions, such as screenshot and screen recording, causing life of people to be more convenient and intelligent.

### SUMMARY

This application provides a data transmission method, an electronic device, and a storage medium. In this method, a user drags a screenshot thumbnail or a screen recording video thumbnail, and may transmit a screenshot image or a screen recording video corresponding to the thumbnail to another service, thereby implementing convenient transmission of resource data between services.

According to a first aspect, this application provides a data transmission method. The method includes: The electronic device displays a first thumbnail corresponding to a screenshot image or a screen recording video at a first position in response to a first operation; the electronic device creates a second thumbnail at the first position in response to a second operation performed on the first thumbnail, and hides the first thumbnail, where the second thumbnail and the first thumbnail have a same image picture, and the second thumbnail is a draggable image; the electronic device moves the second thumbnail with a hand in response to movement of a third operation, where the third operation is performed on the second thumbnail, and the third operation is a dragging operation continuous with the second operation; and the electronic device drags the second thumbnail to a first region in response to the third operation and then releases the second thumbnail, transmits the screenshot image or the screen recording video corresponding to the first thumbnail to a first service, and skips displaying the first thumbnail and the second thumbnail, where the first region is a hotspot corresponding to the first service.

In an example, the first operation may be a screenshot operation or an operation of ending screen recording. The screenshot operation may be, for example, an operation such as tapping a screen by using a knuckle, a gesture on air, tapping a shortcut switch, or pressing a combination of buttons. The operation of ending screen recording may be, for example, an operation such as tapping a shortcut switch, pressing a combination of buttons, a gesture on air, or voice control.

In an example, the first position may be a region at a lower left corner of a display screen.

In an example, the second operation may be a touch and hold operation with a finger, and the third operation may be operation of dragging the second thumbnail by a finger.

In an example, the first thumbnail may be a thumbnail view image mentioned below, and the second thumbnail may be a draggable thumbnail image mentioned below.

In this way, the user drags the screenshot thumbnail or the screen recording video thumbnail, and may transmit the screenshot image or the screen recording video corresponding to the thumbnail to another service. The operation is simple and convenient, and rapid transmission of resource data between services is implemented.

According to the first aspect, the first service is a service that allows receiving the screenshot image or the screen recording video.

The first service may receive the resource data transmitted by dragging. In an example, the first service may be a global favorites service, a note service, a service registered in a specified application, and the like mentioned below.

According to the first aspect and any implementation of the first aspect, the solution further includes: The electronic device drags the second thumbnail to a second region in response to the third operation and then releases the second thumbnail, moves the second thumbnail to the first position and skips displaying the second thumbnail, and redisplays the first thumbnail, where the second region is a region corresponding to a second service, the second service is a service that does not allow receiving the screenshot image or the screen recording video, or the second region is a non-hotspot.

In an example, the second region may be a desktop icon region or a desktop blank region.

In this way, when the user drags the thumbnail to a position at which the resource data cannot be received and releases the thumbnail, the electronic device restores displaying a situation before the user drags the thumbnail. In this case, the user may further trigger the dragging operation on the thumbnail again.

According to the first aspect or any implementation of the first aspect, that the electronic device creates a second thumbnail at a first position includes: The electronic device resets the first thumbnail back to the first position; the electronic device creates a DragShadowBuilder object by using the first thumbnail as a parameter, where the second thumbnail is a DragShadow object generated by the DragShadowBuilder object; the electronic device creates a target data structure object, where the target data structure stores a uniform resource identifier of the screenshot image or the screen recording video; and the electronic device uses the DragShadowBuilder object and the target data structure as invoking parameters, and invokes a target dragging method to enable a dragging function for the DragShadow object.

In an example, the target dragging method is a startDragAndDrop method.

According to the first aspect or any implementation of the first aspect, the target data structure object is a ClipData object.

According to the first aspect or any implementation of the first aspect, that the electronic device drags the second thumbnail to a first region and then releases the second thumbnail and skips displaying the first thumbnail includes: The electronic device monitors a first dragging event on the second thumbnail, where an operation type of the first dragging event is a dragging end; and the electronic device skips displaying the first thumbnail when it is found that the screenshot image or the screen recording video has been transmitted and processed.

In this way, the electronic device monitors the dragging operation performed by the user on the second thumbnail, and performs a corresponding response operation based on the type of the dragging operation. When the type of the dragging operation of the user is the dragging end, the electronic device operates whether the resource data corresponding to the thumbnail has been transmitted and processed. If the resource data has been transmitted and processed, the electronic device no longer displays the thumbnail, for example, destroys the thumbnail.

According to the first aspect or any implementation of the first aspect, that the electronic device drags the second thumbnail to a second region and then releases the second thumbnail and displays the first thumbnail includes: The electronic device monitors a second dragging event on the second thumbnail, where an operation type of the second dragging event is a dragging end; and the electronic device redisplays the first thumbnail when it is found that the screenshot image or the screen recording video has not been transmitted and processed.

When the type of the dragging operation of the user is the dragging end, the electronic device determines whether the resource data corresponding to the thumbnail has been transmitted and processed. If the resource data has not been transmitted and processed, the electronic device redisplays the first thumbnail. In this case, the user may further trigger the dragging operation on the thumbnail again.

According to the first aspect or any implementation of the first aspect, that the electronic device hides the first thumbnail may include: The electronic device records an original size of the first thumbnail, and resets the size of the first thumbnail to 0. Correspondingly, that the electronic device redisplays the first thumbnail may include: The electronic device resets the size of the first thumbnail to the original size that is recorded. In this way, the electronic device may hide or redisplay the thumbnail by adjusting the size of the thumbnail.

According to the first aspect or any implementation of the first aspect, the electronic device sets the first thumbnail to be fully transparent. Correspondingly, that the electronic device redisplays the first thumbnail may include: The electronic device sets the first thumbnail to be non-transparent. In this way, the electronic device can achieve an effect of hiding or redisplaying the thumbnail by adjusting the transparency of the thumbnail.

According to the first aspect or any implementation of the first aspect, the electronic device sets the visibility of the first thumbnail to be invisible. Correspondingly, that the electronic device redisplays the first thumbnail may include: The electronic device sets the visibility of the first thumbnail to be visible. In this way, the electronic device can achieve an effect of hiding or redisplaying the thumbnail by adjusting the visibility attribute of the thumbnail.

According to the first aspect or any implementation of the first aspect, the method further includes: The electronic device generates a target picture frame at the first position in response to the second operation, where the target picture frame is configured to indicate a dragging start region of the second thumbnail; the electronic device drags the second thumbnail to a third region in response to the third operation, and hides the target picture frame, where when the second thumbnail is located in the third region, no intersection set exists between the second thumbnail and the target picture frame; and the electronic device drags the second thumbnail to a fourth region in response to the third operation, and displays the target picture frame, where when the second thumbnail is located in the fourth region, an intersection set exists between the second thumbnail and the target picture frame.

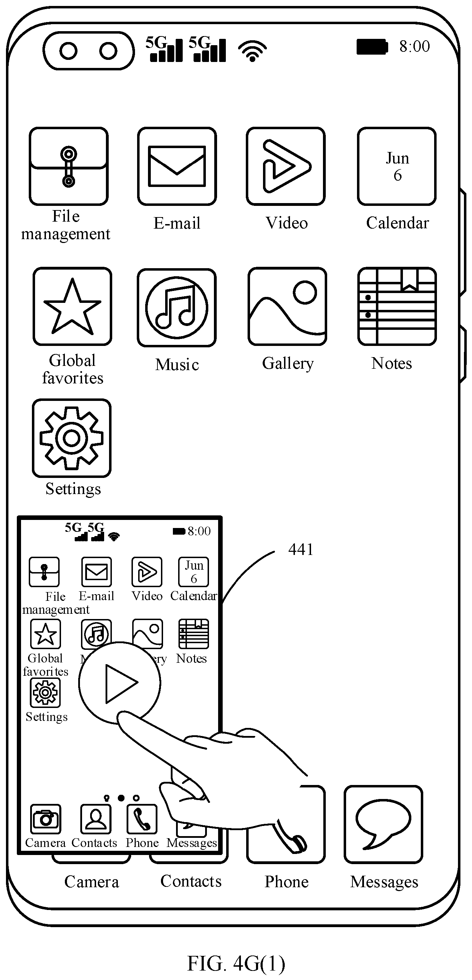

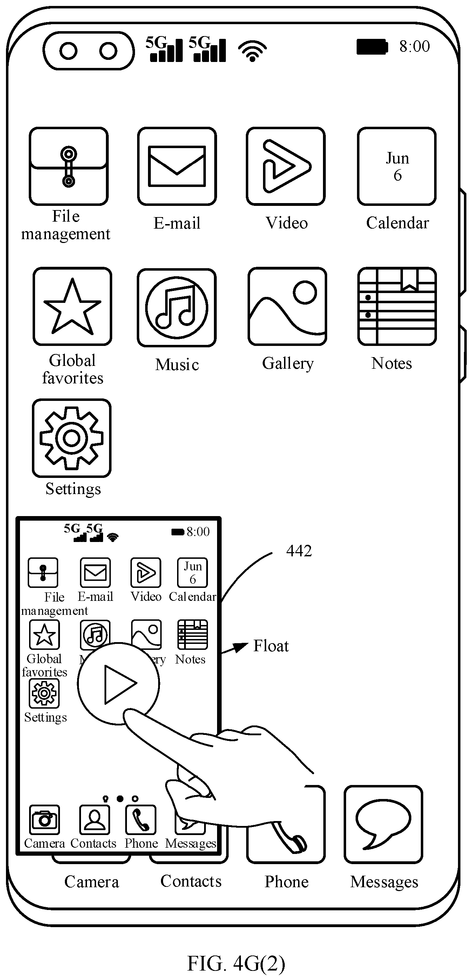

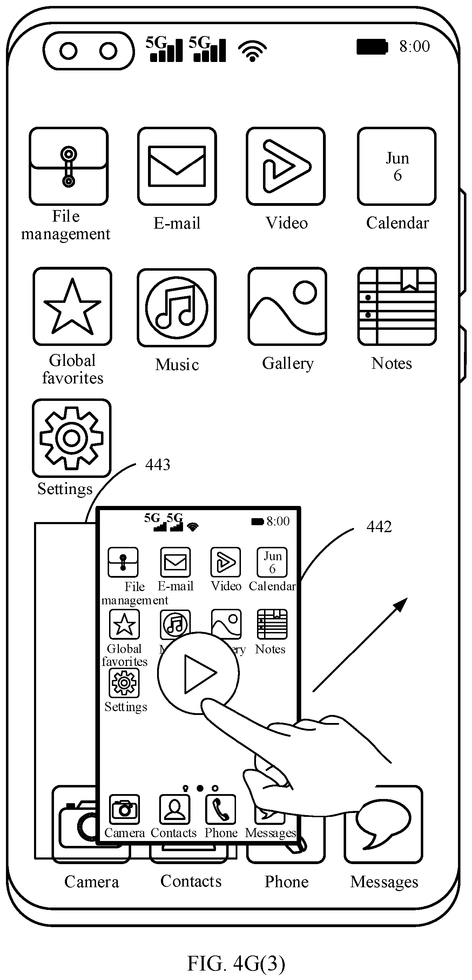

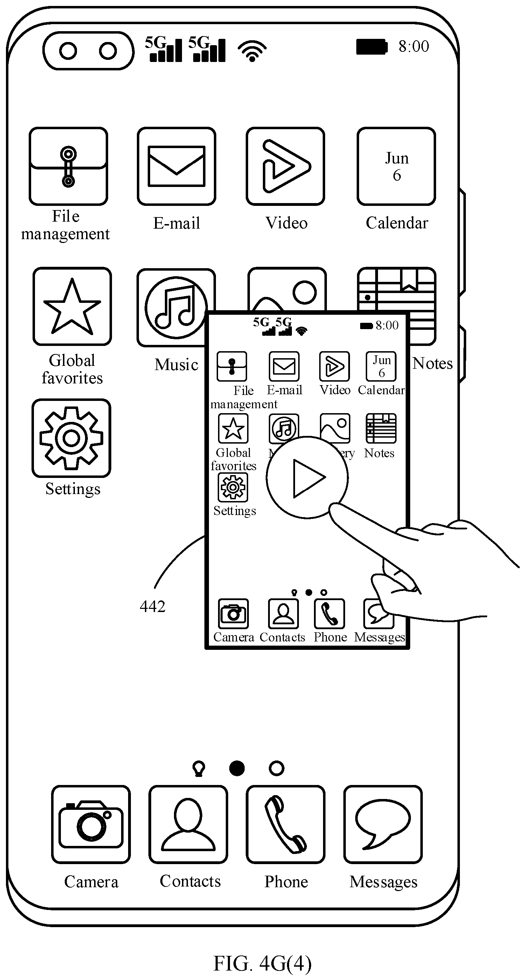

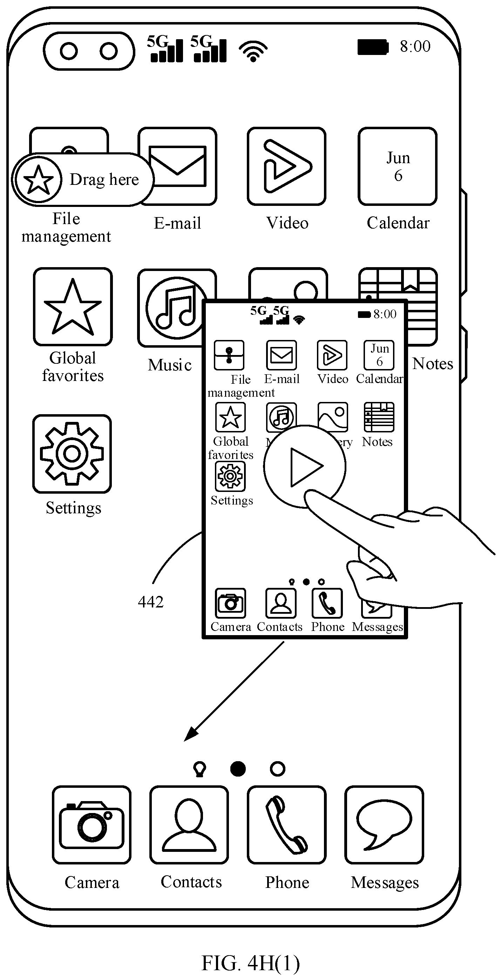

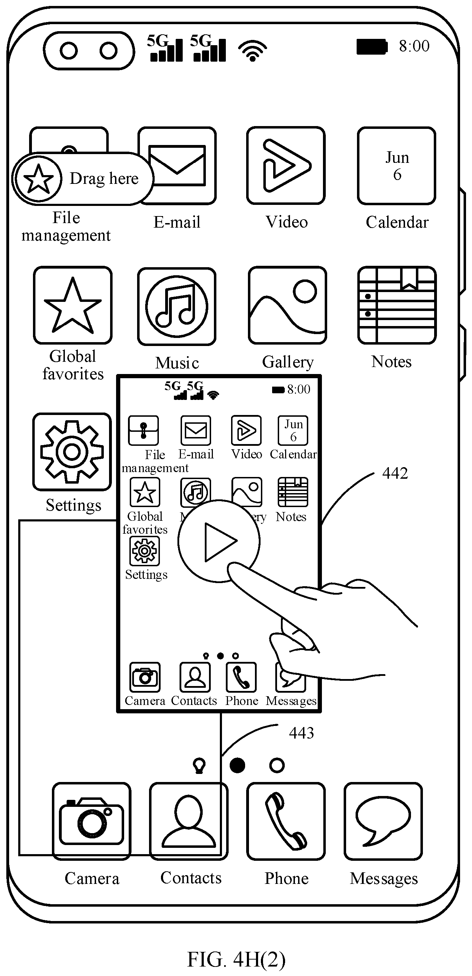

In an example, the target picture frame may be a picture frame view object mentioned below, as shown by a picture frame 443 in FIG. 4G(1), FIG. 4G(2), FIG. 4G(3), FIG. 4G(4), FIG. 4H(1), and FIG. 4H(2). When the second thumbnail is dragged to a position where no intersection set exists between the second thumbnail and the target picture frame, the target picture frame is not displayed. When the second thumbnail is dragged to a position where the intersection set exists between the second thumbnail and the target picture frame, the target picture frame is displayed.

In this implementation, the target picture frame may be configured to visually prompt the user. The user is prompted that stopping dragging the thumbnail and releasing the thumbnail in a picture frame region may cancel the dragging operation on the thumbnail.

According to the first aspect or any implementation of the first aspect, the method further includes: The electronic device drags the second thumbnail to the fourth region in response to the third operation and then releases the second thumbnail, moves the second thumbnail to the first position and skips displaying the second thumbnail, and redisplays the first thumbnail.

In this way, when the user drags the thumbnail to a position where the intersection set exists between the thumbnail and the target image and releases the thumbnail, the electronic device restores a situation before the thumbnail is dragged. In this case, the user may further trigger the dragging operation on the thumbnail again.

According to the first aspect or any implementation of the first aspect, that the electronic device drags the second thumbnail to the fourth region in response to the third operation and then releases the second thumbnail and redisplays the first thumbnail includes: The electronic device monitors a third dragging event on the second thumbnail, where an operation type of the third dragging event is a dragging end; and the electronic device redisplays the first thumbnail when it is found that the screenshot image or the screen recording video has not been transmitted and processed.

When the type of the dragging operation of the user is the dragging end, the electronic device determines whether the resource data corresponding to the thumbnail has been transmitted and processed. If the resource data has not been transmitted and processed, the electronic device redisplays the first thumbnail. In this case, the user may further trigger the dragging operation on the thumbnail again.

According to the first aspect or any implementation of the first aspect, that the electronic device drags the second thumbnail to a third region in response to the third operation and hides the target picture frame includes: The electronic device monitors a fourth dragging event on the second thumbnail, and sets the target picture frame to be fully transparent, where an operation type of the fourth dragging event is leaving a picture frame region. Correspondingly, that the electronic device drags the second thumbnail to the fourth region and displays the target picture frame includes: monitoring a fifth dragging event on the second thumbnail, and setting the target picture frame to be non-fully transparent, where an operation type of the fifth dragging event is entering a picture frame region.

When the type of the dragging operation of the user is leaving the picture frame region, the electronic device sets the target picture frame to be fully transparent to hide the target picture frame. When the type of the dragging operation of the user is entering the picture frame region, the electronic device sets the target picture frame to be non-fully transparent to cancel hiding the target picture frame.

According to the first aspect or any implementation of the first aspect, after the displaying a first thumbnail corresponding to a screenshot image or a screen recording video at a first position, the method further includes: The electronic device starts target timing for the first thumbnail, where the target timing is used to trigger non-display the first thumbnail when a timing duration reaches a preset duration; and the electronic device monitors a sixth dragging event on the second thumbnail, and cancels the target timing for the first thumbnail, where an operation type of the sixth dragging event is a dragging start.

This implementation considers the existing solution of the automatic disappearance timing for the thumbnail. When the user starts dragging, the automatic disappearance timing for the thumbnail is canceled, to avoid that the thumbnail is destroyed because the timing ends during dragging the thumbnail by the user.

According to the first aspect or any implementation of the first aspect, after the electronic device redisplays the first thumbnail, the method further includes: The electronic device restarts the target timing for the first thumbnail.

In this implementation, if the dragging operation of the user is canceled, or if the dragging operation of the user ends but the resource data corresponding to the thumbnail has not been processed, the electronic device is caused to redisplay the corresponding thumbnail. Therefore, the electronic device restarts the automatic disappearance timing for the thumbnail. Before the automatic disappearance timing ends, the user may further trigger the dragging operation on the thumbnail again.

According to the first aspect or any implementation of the first aspect, after the electronic device creates the second thumbnail at the first position, the method further includes: The electronic device moves the second thumbnail from the first position to a second position based on a position of the second operation, where when the second thumbnail is located in the second position, the position of the second operation is located in a central region of the second thumbnail.

In this way, no matter which region of the pressing position of the thumbnail triggered by the user to move the thumbnail is located, the electronic device may automatically adjust the position of the thumbnail, so that the pressing position of the user is located in a central region of the thumbnail, thereby improving dragging experience of the user.

According to a second aspect, this application provides an electronic device. The electronic device includes a memory and a processor. The processor is coupled to the memory, and the memory stores a program instruction. When the program instruction is executed by the processor, the electronic device performs the data transmission method of the first aspect and any implementation of the first aspect.

The second aspect and any implementation of the second aspect respectively correspond to the first aspect and any implementation of the first aspect. For technical effects of the second aspect and any implementation of the second aspect, reference may be made to the technical effects corresponding to the first aspect and any implementation of the first aspect. Details are not described herein again.

According to a third aspect, this application provides a computer-readable medium, which is configured to store a computer program. The computer program includes an instruction for performing the method of the first aspect or any possible implementation of the first aspect.

The third aspect and any implementation of the third aspect respectively correspond to the first aspect and any implementation of the first aspect. For technical effects of the third aspect and any implementation of the third aspect, reference may be made to the technical effects corresponding to the first aspect and any implementation of the first aspect. Details are not described herein again.

According to a fourth aspect, this application provides a computer program. The computer program includes an instruction for performing the data transmission method of the first aspect and any implementations of the first aspect.

The fourth aspect and any implementation of the fourth aspect respectively correspond to the first aspect and any implementation of the first aspect. For technical effects of the fourth aspect and any implementation of the fourth aspect, reference may be made to the technical effects corresponding to the first aspect and any implementation of the first aspect. Details are not described herein again.

According to a fifth aspect, this application provides a chip. The chip includes a processing circuit and a transceiver pin. The transceiver pin and the processing circuit communicate with each other through an internal connection path. The processing circuit performs the data transmission method according to the first aspect or any implementation of the first aspect, to control a receiving pin to receive a signal and to control a sending pin to send a signal.

The fifth aspect and any implementation of the fifth aspect respectively correspond to the first aspect and any implementation of the first aspect. For technical effects of the fifth aspect and any implementation of the fifth aspect, reference may be made to the technical effects corresponding to the first aspect and any implementation of the first aspect. Details are not described herein again.

### BRIEF DESCRIPTION OF DRAWINGS

FIG. 1 is an example schematic diagram of a hardware structure of an electronic device;
FIG. 2 is an example schematic diagram of a software structure of an electronic device;
FIG. 3A(1), FIG. 3A(2), FIG. 3A(3), FIG. 3B(1), FIG. 3B(2), FIG. 3B(3), FIG. 3C(1), FIG. 3C(2), FIG. 3D(1), FIG. 3D(2), FIG. 3D(3), FIG. 3E(1), and FIG. 3E(2) are example schematic diagrams of an application scenario of a screen recording function and a screenshot function of an electronic device;
FIG. 4A(1), FIG. 4A(2), FIG. 4A(3), FIG. 4A(4), FIG. 4B(1), FIG. 4B(2), FIG. 4B(3), and FIG. B(4) are example schematic diagrams of a data transmission scenario based on dragging a screen recording video thumbnail;
FIG. 4C(1), FIG. 4C(2), FIG. 4C(3), FIG. 4C(4) are an example schematic diagram of a data transmission scenario based on dragging a screen recording video thumbnail;
FIG. 4D(1), FIG. 4D(2), FIG. 4D(3), FIG. 4D(4), FIG. 4E(1), FIG. 4E(2), and FIG. 4E(3) are example schematic diagrams of a data transmission scenario based on dragging a screen recording video thumbnail;
FIG. 4F(1), FIG. 4F(2), FIG. 4F(3), and FIG. 4F(4) are an example schematic diagram of a scenario of dragging and resetting a screen recording video thumbnail;
FIG. 4G(1), FIG. 4G(2), FIG. 4G(3), FIG. 4G(4), FIG. 4H(1), and FIG. 4H(2) are example schematic diagrams of dragging a screen recording video thumbnail;
FIG. 5 is an example interaction flowchart of a data transmission method based on dragging a screen recording video thumbnail;
FIG. 6A is an example flowchart of processing logic of starting dragging a thumbnail;
FIG. 6B(1), FIG. 6B(2), and FIG. 6B(3) are an example schematic diagram of a scenario of automatically adjusting a position of a draggable thumbnail image based on a pressing position of a user; and
FIG. 6C is an example flowchart of processing logic of responding to dragging a draggable thumbnail image by a user.

### DESCRIPTION OF EMBODIMENTS

The technical solutions in embodiments of this application are clearly and completely described below with reference to the accompanying drawings in embodiments of this application. Apparently, the described embodiments are merely some rather than all embodiments of this application. All other embodiments obtained by a person of ordinary skill in the art based on embodiments of this application without creative efforts fall within the protection scope of this application.

The term "and/or" herein is merely an association relationship describing related objects, which means that there may be three relationships, for example, A and/or B may indicate three cases: A exists alone, A and B exist simultaneously, and B exists alone.

The terms "first", "second", and the like in the specification of embodiments of this application and the claims are used to distinguish between different objects, but are not used to indicate a specific sequence of objects. For example, a first target object and a second target object are used to distinguish between different target objects, but are not used to describe a specific sequence of the target objects.

In embodiments of this application, a word such as "in an example" or "for example" is used to represent giving an example, an illustration, or a description. Any embodiment or design solution described as "in an example" or "for example" in embodiments of this application should not be explained as being more preferred or having more advantages than another embodiment or design solution. Exactly, use of the words such as "in an example" or "for example" is intended to present a concept in a specific manner.

In the description of embodiments of this application, unless otherwise specified, "a plurality of" means two or more. For example, a plurality of processing units mean two or more processing units, and a plurality of systems mean two or more systems.

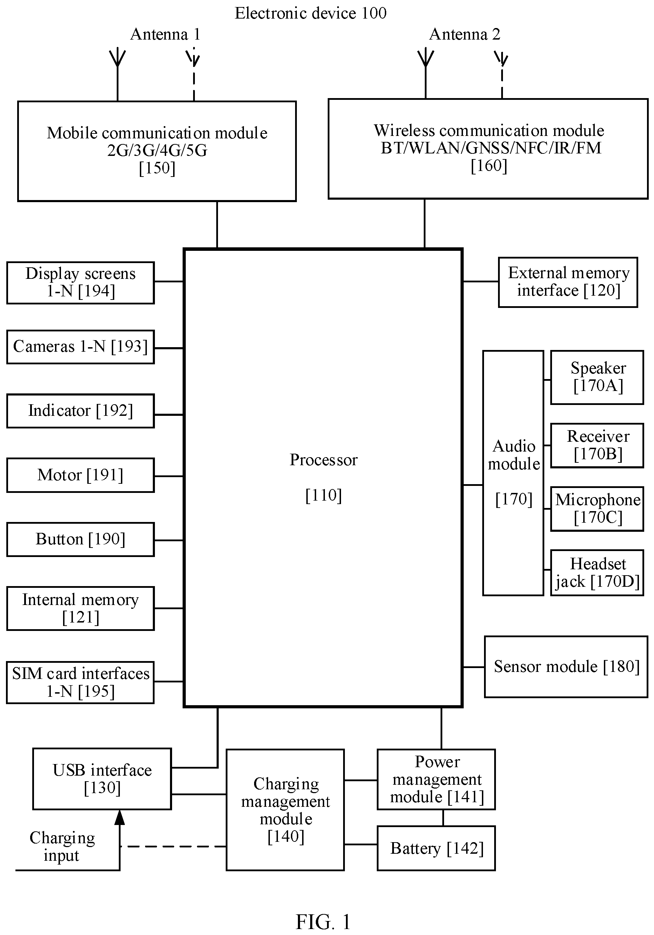

FIG. 1 is a schematic structural diagram of an electronic device 100. It should be understood that the electronic device 100 shown in FIG. 1 is merely an example of the electronic device, and the electronic device 100 may have more or fewer components than those shown in the figure, or may have a combination of two or more components, or may have different component configurations. Various components shown in FIG. 1 may be implemented by hardware that includes one or more signal processors and/or application-specific integrated circuits, software, or a combination of hardware and software.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identity module (subscriber identification module, SIM) card interface 195, and the like. The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be devices independent of each other, or may be integrated in one or more processors.

The controller may be a nerve center and a command center of the electronic device 100. The controller may generate an operation control signal based on instruction operation code and a timing signal, and control obtaining and execution of an instruction.

A memory may be further arranged in the processor 110, which is configured to store an instruction and data. In some embodiments, the memory in the processor 110 is a cache memory. The memory may store an instruction or data that has just been used or recycled by the processor 110. If the processor 110 needs to use the instruction or the data again, the processor may directly invoke the instruction or the data from the memory. This avoids repeated access, and reduces a waiting time of the processor 110, so that system efficiency is improved.

In some embodiments, the processor 110 may include one or more interfaces. The interface may include an integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that a schematic interface connection relationship between the modules in embodiments of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of the wired charger through the USB interface 130. In some embodiments of wireless charging, the charging management module 140 may receive a wireless charging input through a wireless charging coil of the electronic device 100. The charging management module 140 may further supply power to the electronic device through the power management module 141 while charging the battery 142.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna of the electronic device 100 may be configured to cover one or more communication frequency bands. Different antennas may further be multiplexed to increase a utilization rate of the antennas. For example, the antenna 1 may be multiplexed as a diversity antenna of a wireless local area network. In some other embodiments, the antennas may be used in combination with a tuning switch.

The mobile communication module 150 may provide a solution to wireless communication including 2G/3G/4G/5G and the like applied to the electronic device 100. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering and amplification on the received electromagnetic wave, and send the electromagnetic wave to the modem processor for demodulation. The mobile communication module 150 may further amplify a signal modulated by the modem processor, and convert the signal into an electromagnetic wave through the antenna 1 for radiation. In some embodiments, at least some of functional modules of the mobile communication module 150 may be arranged in the processor 110. In some embodiments, at least some of the functional modules of the mobile communication module 150 may be arranged in a same device as at least some of modules of the processor 110.

The wireless communication module 160 may provide solutions of wireless communication applicable to the electronic device 100, for example, a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), and an infrared (infrared, IR) technology. The wireless communication module 160 may be one or more components into which at least one communication processing module is integrated. The wireless communications module 160 receives an electromagnetic wave through the antenna 2, performs frequency modulation and filtering on the electromagnetic wave signal, and sends the processed signal to the processor 110. The wireless communications module 160 may further receive a to-be-sent signal from the processor 110, perform frequency modulation on and amplify the to-be-sent signal, and convert the to-be-sent signal into an electromagnetic wave by using the antenna 2 for radiation.

The electronic device 100 implements a display function through the GPU, the display screen 194, the application processor, and the like. The GPU is a microprocessor for image processing, and is connected to the display screen 194 and the application processor. The GPU is configured to perform mathematical and geometric calculation, and is configured to perform graphics rendering. The processor 110 may include one or more GPUs and is configured to execute a program instruction to generate or change display information. The display screen 194 is configured to display an image, a video, and the like. The display screen 194 includes a display panel.

The electronic device 100 may implement a photographing function through the ISP, the camera 193, the video codec, the GPU, the display screen 194, the application processor, and the like. The camera 193 is configured to capture a static image or a video. In some embodiments, the electronic device 100 may include 1 or N cameras 193, N being a positive integer greater than 1.

The digital signal processor is configured to process a digital signal. In addition to a digital image signal, the digital signal processor may further process another digital signal. For example, when the electronic device 100 performs frequency selection, the digital signal processor is configured to perform Fourier transform and the like on frequency energy.

The video codec is configured to compress or decompress a digital video. The electronic device 100 may support one or more video codecs. In this way, the electronic device 100 may play or record videos in a plurality of encoding formats, for example, moving picture experts group (moving picture experts group, MPEG) 1, MPEG2, MPEG3, MPEG4, and the like.

The external memory interface 120 may be configured to connect to an external storage card such as a micro SD card, to expand a storage capacity of the electronic device 100. The external storage card communicates with the processor 110 through the external memory interface 120, to implement a data storage function. For example, files such as music and a video are stored in the external storage card.

The internal memory 121 may be configured to store computer-executable program code. The executable program code includes an instruction. The processor 110 runs the instruction stored in the internal memory 121, to implement various functional applications and data processing of the electronic device 100. The internal memory 121 may include a program storage area and a data storage area. The program storage area may store an operating system, an application required by at least one function (for example, a sound playback function or an image playback function), and the like. The data storage area may store data (for example, audio data and an address book) and the like created during use of the electronic device 100. In addition, the internal memory 121 may include a high-speed random access memory, or may include a non-volatile memory such as at least one magnetic disk storage device, a flash memory device, and a universal flash storage (universal flash storage, UFS). In an example, in this embodiment of this application, the processor 110, by running an instruction stored in the internal memory 121, may implement the data transmission method based on a thumbnail in embodiments of this application.

The electronic device 100 may implement an audio function through the audio module 170, the speaker 170A, the receiver 170B, the microphone 170C, the headset jack 170D, the application processor, and the like. The audio function includes, for example, music playing and sound recording.

The pressure sensor is configured to sense a pressure signal, and may convert the pressure signal into an electrical signal. In some embodiments, the pressure sensor may be arranged in the display screen 194. When a force is applied to the pressure sensor, a capacitance between electrodes changes. The electronic device 100 determines a strength of the pressure based on the change of the capacitance. When a touch operation is performed on the display screen 194, the electronic device 100 detects a strength of the touch operation through the pressure sensor. The electronic device 100 may further calculate a touch position based on a detection signal of the pressure sensor. In some embodiments, touch operations that are applied to a same touch position but have different touch operation strengths may correspond to different operation instructions. For example, when a touch operation having a touch operation strength less than a first pressure threshold is applied to a short message application icon, an instruction of viewing the short message application is executed. When a touch operation having a touch operation strength greater than or equal to the first pressure threshold is applied to the short message application icon, an instruction of creating a new short message is executed.

The touch sensor is also referred to as a "touch panel". The touch sensor may be arranged in the display screen 194. The touch sensor and the display screen 194 form a touch screen, which is also referred to as a "touch screen". The touch sensor is configured to detect a touch operation performed on or near the touch sensor. The touch sensor may transfer the detected touch operation to the application processor to determine a type of a touch event. A visual output related to the touch operation may be provided through the display screen 194. In some other embodiments, the touch sensor 180K may alternatively be arranged on a surface of the electronic device 100 at a position different from that of the display screen 194.

The button 190 includes a power button, a volume button, and the like. The button 190 may be a mechanical button. The button may alternatively be a touch button. The electronic device 100 may receive a button input, and generate a button signal input related to a user setting and function control of the electronic device 100.

In an example, a software system of the electronic device 100 may use a layered architecture, an event-driven architecture, a micro core architecture, a micro service architecture, or a cloud architecture. In this embodiment of this application, an Android system with a layered architecture is used as an example to describe the software structure of the electronic device 100.

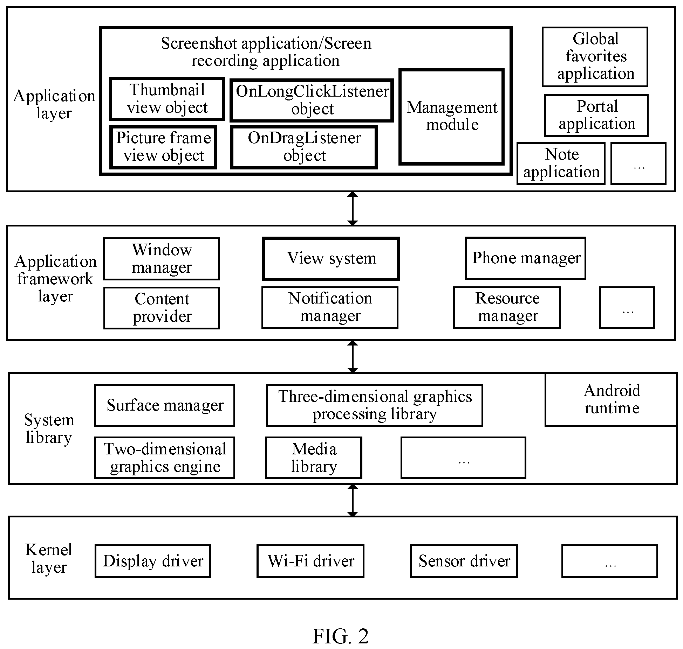

FIG. 2 is a block diagram of a software structure of an electronic device 100 according to an embodiment of this application.

In a layered architecture of the electronic device 100, software is divided into several layers, and each of the layers has a clear role and task. The layers communicate with each other through a software interface. In some embodiments, the Android system is divided into four layers, which are an application layer, an application framework layer, an Android runtime (Android runtime) and system library, and a kernel layer from top to bottom.

The application layer may include a series of application packages.

As shown in FIG. 2, the application package may include a screenshot application, a screen recording application, a global favorites application, a gallery, a note application, and the like. In an example, the application package may further include applications such as phone, calendar, maps, navigation, music, videos, messages, camera, WLAN, and Bluetooth.

The screenshot/screen recording application may implement the data transmission method based on a thumbnail in embodiments of this application, and the thumbnail may be a screenshot image thumbnail or a screen recording video thumbnail. In an example, to implement the data transmission method based on a thumbnail in embodiments of this application, the screenshot/screen recording application may include a management module, a thumbnail view (view) object, an OnLongClickListener (OnLongClickListener) object bound to the thumbnail view (view) object, a picture frame view object, and an OnDragListener (OnDragListener) object bound to the picture frame view object. The management module may be configured to manage life cycles of the thumbnail view object, the OnLongClickListener object, the picture frame view object, and the OnDragListener object. The OnLongClickListener object is configured to monitor a touch and hold operation performed by a user on the thumbnail view object, and the OnDragListener object is configured to monitor a dragging operation, a dropping operation, and the like performed by the user on a draggable thumbnail image. In an optional implementation, the OnDragListener object may further be bound to another view object. This is not limited in this embodiment.

The application framework layer provides an application programming interface (application programming interface, API) and a programming framework for the applications at the application layer. The application framework layer includes some predefined functions.

As shown in FIG. 2, the application framework layer may include a window manager, a content provider, a view system, a phone manager, a resource manager, a notification manager, and the like.

The view (view) system includes visual controls such as a control configured to display a text and a control configured to display a picture. The view system may be configured to construct an application. A display interface may be composed of one or more views (view). For example, after the user performs screenshot or ends a screen recording, a thumbnail view object may be displayed on a display interface. In this embodiment of this application, the view system may further be configured to build a draggable thumbnail image corresponding to the thumbnail view object, support a dragging operation, a dropping operation, and the like performed by the user on the draggable thumbnail image. The view system may further be configured to bind the view object and the listener object, deliver a touch and hold event of the user for the thumbnail view object to the OnLongClickListener object, deliver a dragging event corresponding to the user for the draggable thumbnail image to the OnDragListener object, and the like.

The window manager is configured to manage a window program. The window manager may obtain a size of the display screen, determine whether a status bar exists, lock the screen, perform screenshot, and the like.

The content provider is configured to store and obtain data and enable the data accessible to an application. The data may include a video, an image, audio, calls that are made and answered, a browsing history, a bookmark, a phonebook, and the like.

The phone manager is configured to provide a communication function for the electronic device 100, for example, management of a call state (including answering, hanging up, and the like).

The resource manager provides various resources for an application, such as a localized character string, an icon, a picture, a layout file, and a video file.

The notification manager enables an application to display notification information in the status bar to convey a message of a notification type. The message may disappear automatically after a short stay without requiring user interaction. For example, the notification information is configured to provide a notification of downloading completion, a message notification, and the like. The notification information may alternatively be a notification that appears on a top status bar of a system in a form of a graph or a scroll bar text, for example, a notification of an application that runs on a backend, or may be a notification that appears on a screen in a form of a dialog window. The notification information may further be, for example, text information prompted on the status bar, an alert tone, a vibration of the electronic device, and flashing of an indicator light.

The Android runtime includes a core library and a virtual machine. The Android runtime is responsible for scheduling and managing the Android system.

The core library includes two parts. One part is a performance function that a Java language needs to invoke, and the other part is a core library of Android.

The application layer and the application framework layer run in the virtual machine. The virtual machine executes java files of the application layer and the application framework layer as binary files. The virtual machine is configured to perform functions such as object life cycle management, stack management, thread management, security and exception management, and garbage collection.

The system library may include a plurality of function modules. The function module may be, for example, a surface manager (surface manager), a media library (media libraries), a three-dimensional graphics processing library (for example, OpenGL ES), and a 2D graphics engine (for example, an SGL).

The surface manager is configured to manage a display subsystem, and provide fusion of a 2D layer and a 3D layer for a plurality of applications.

The media library supports playback and recording of a plurality of commonly used audio and video formats, and supports a static image file, and the like. The media library may support a plurality of audio and video encoding formats, for example, MPEG4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a Wi-Fi driver, a sensor driver, and the like.

It may be understood that the layers in the software structure shown in FIG. 2 and the components included in each of the layers do not constitute a specific limitation on the electronic device 100. In some other embodiments of this application, the electronic device 100 may include more or fewer layers than those shown in the figure. Each of the layers may include more or fewer components, or some merged components, or some split components, or different component arrangements.

It may be understood that to implement the data transmission method in embodiments of this application, the electronic device includes a corresponding hardware and/or software module for executing each function. Algorithm and steps in the examples described with reference to embodiments disclosed herein may be implemented by hardware or a combination of hardware and computer software in this application. Whether a function is performed by hardware or computer software driving hardware depends on a particular application and a design constraint of the technical solutions. A person of skill in the art may use different methods to implement the described functions with reference to embodiments for each particular application, but it should not be considered that the implementation goes beyond the scope of this application.

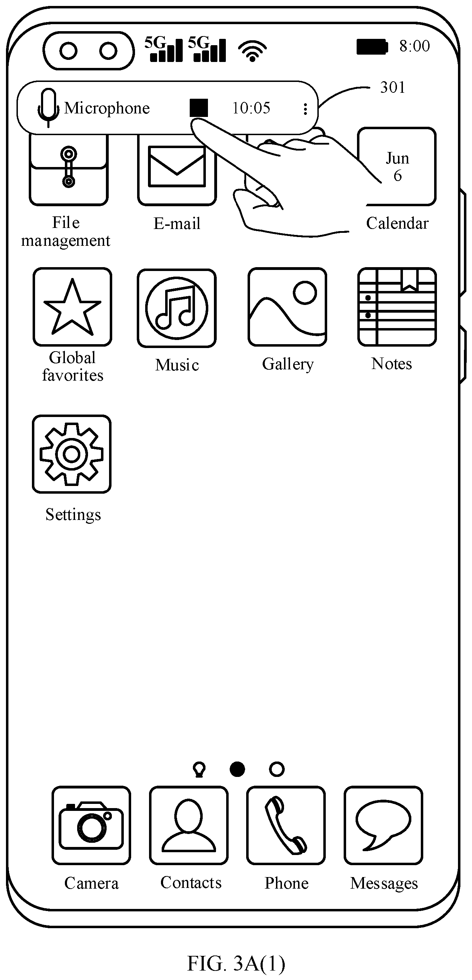

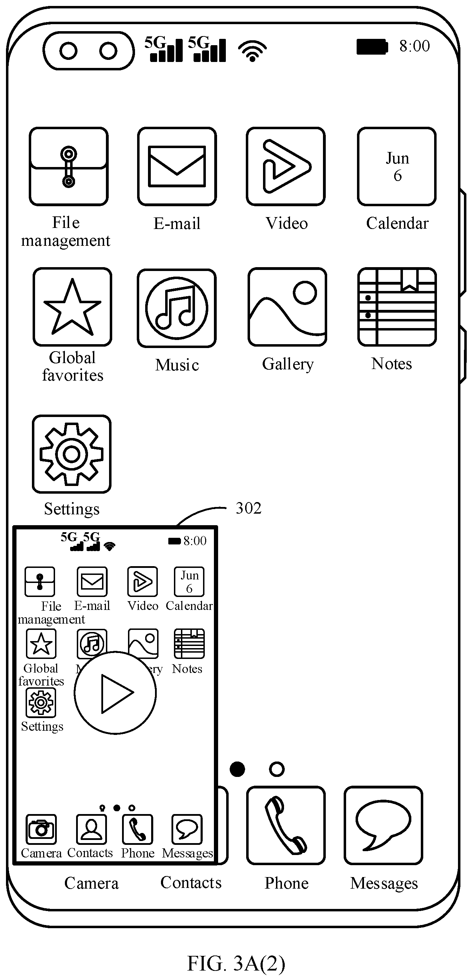

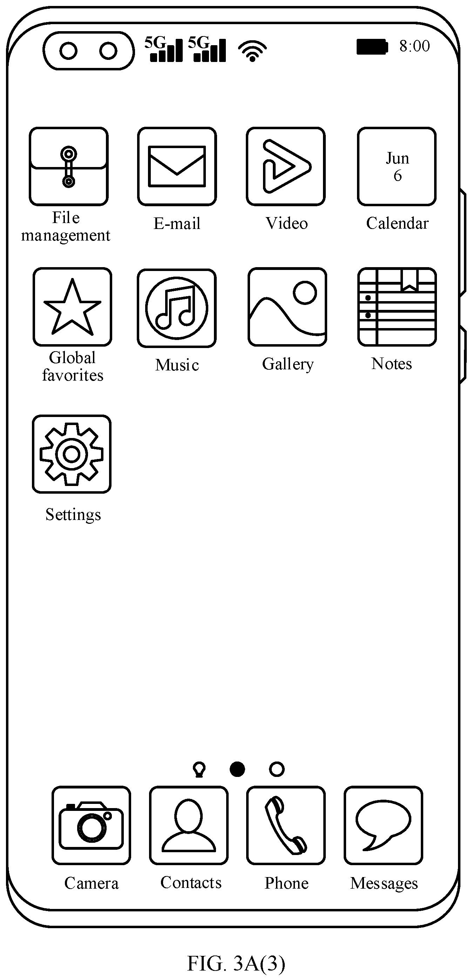

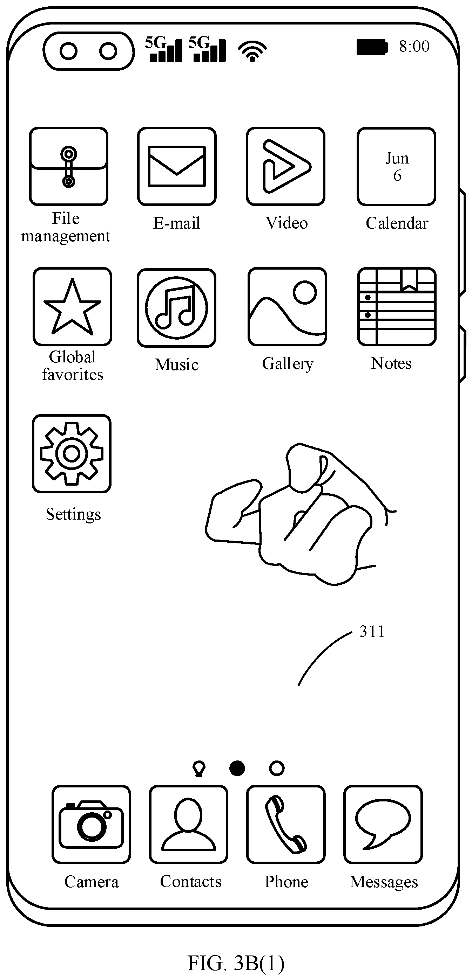

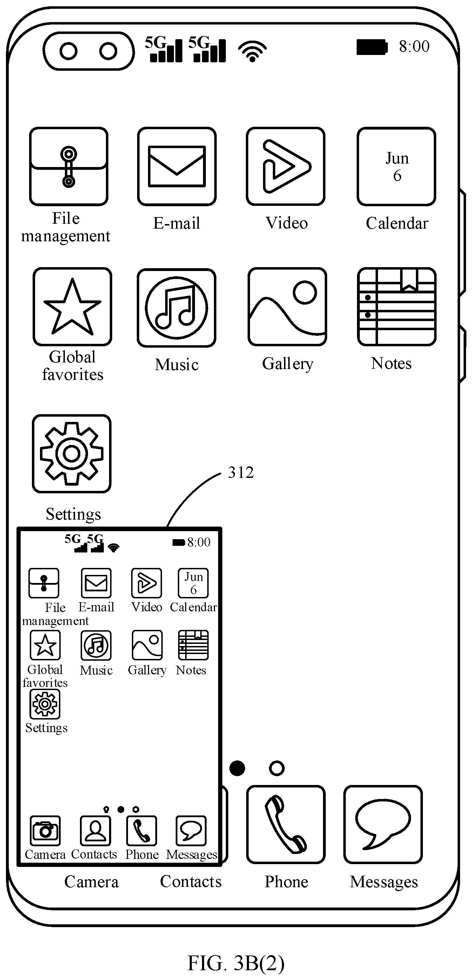

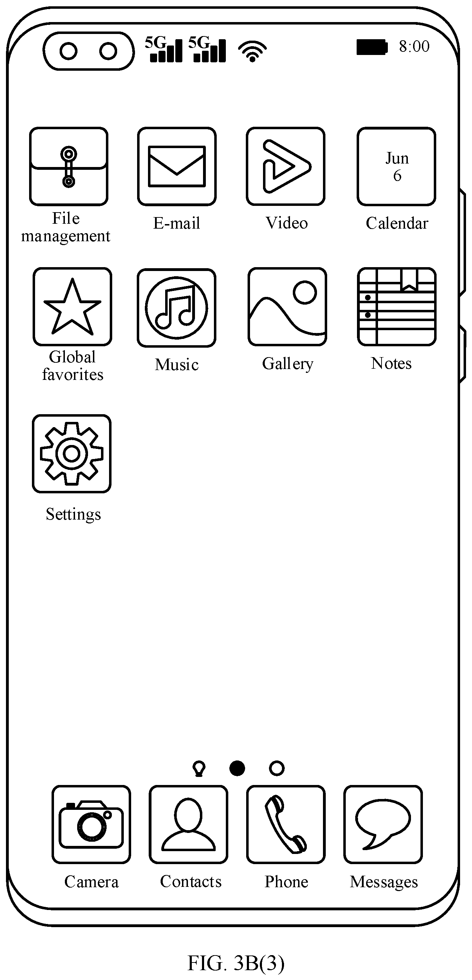

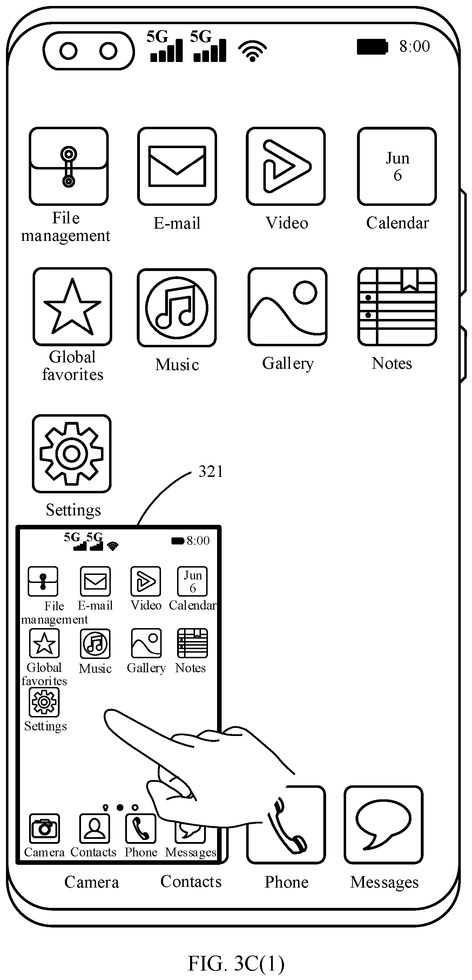

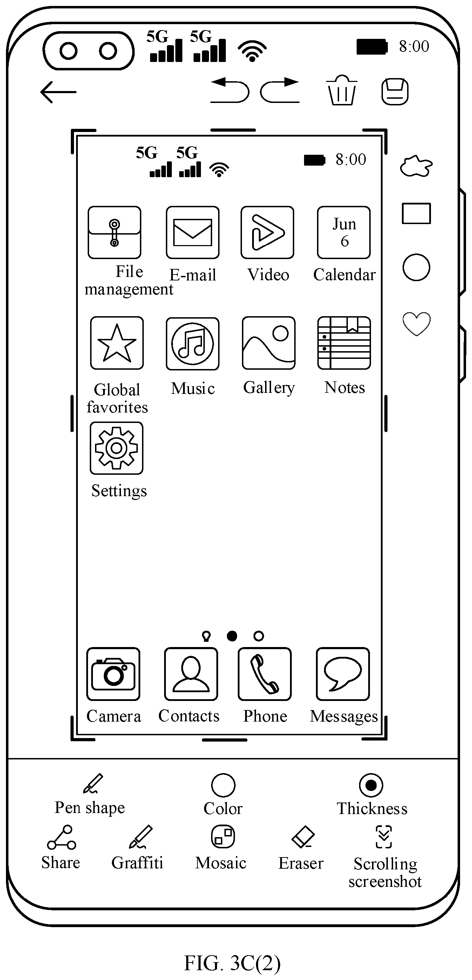

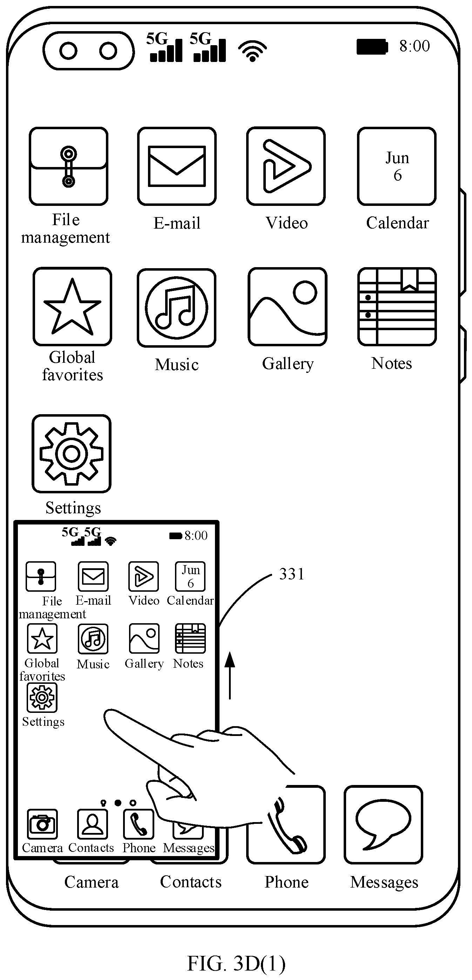

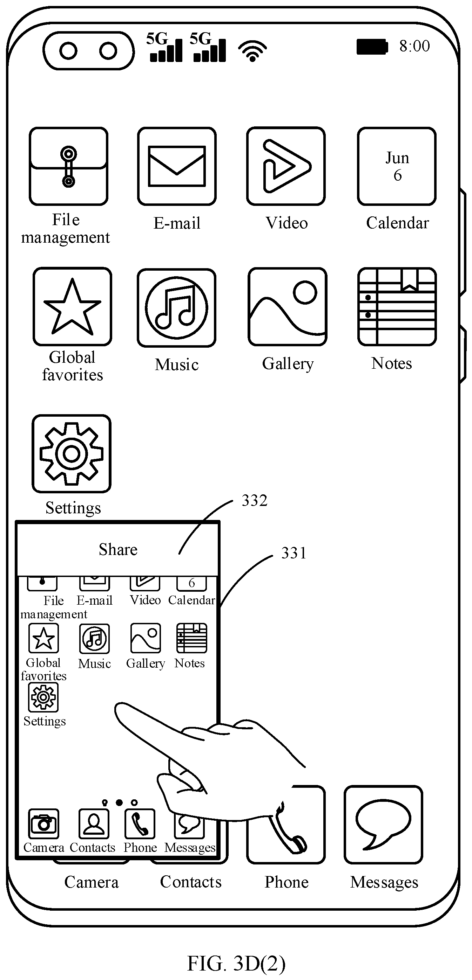

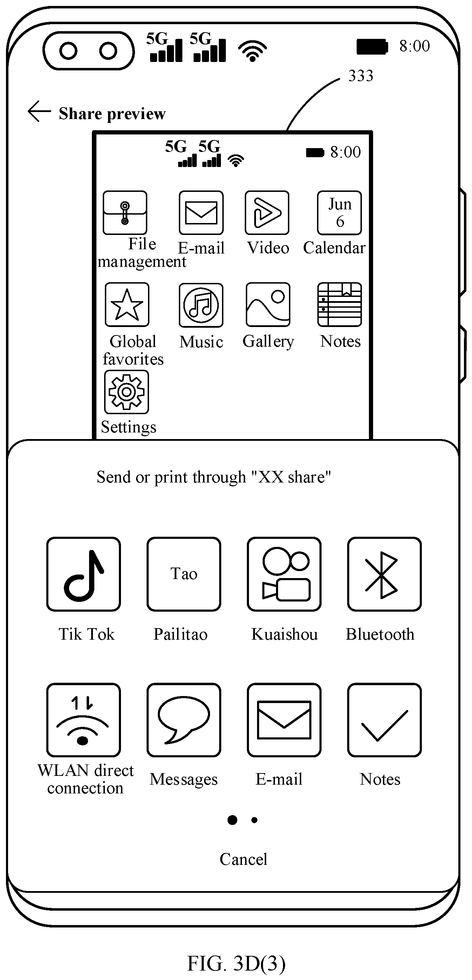

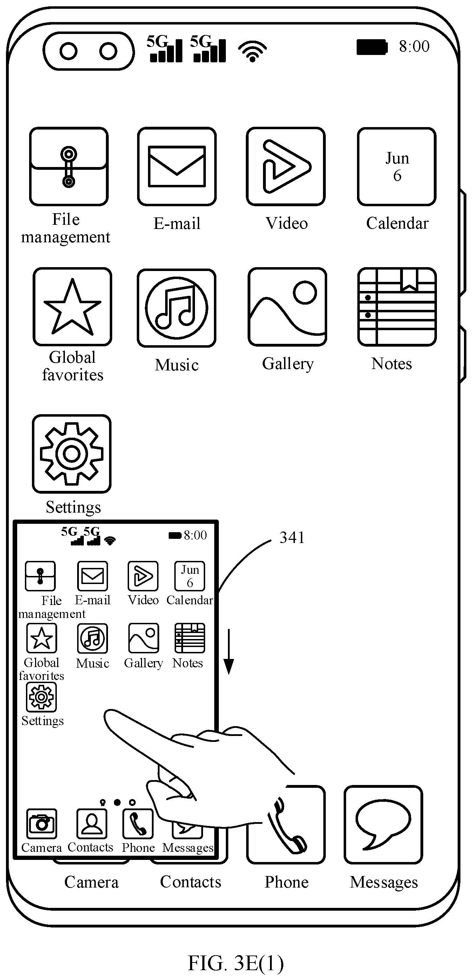

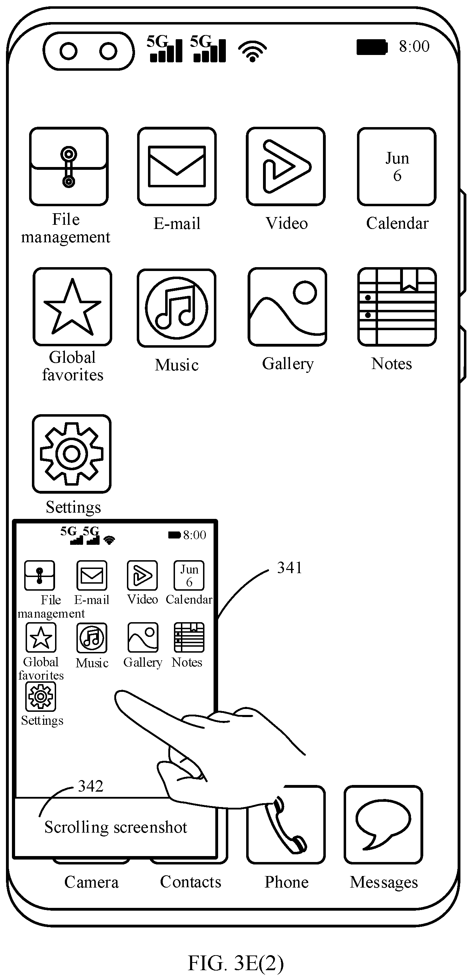

In addition to a basic communication function, an intelligent terminal such as a mobile phone further provides a plurality of practical functions, such as screenshot and screen recording (also referred to as recording a screen). When a user performs a screenshot operation on the mobile phone, the screenshot application generates a screenshot image thumbnail and displays the screenshot image thumbnail on an interface of the mobile phone. Similarly, when the user performs a screen recording ending operation on the mobile phone, the screen recording application generates a screen recording video thumbnail, and displays the screen recording video thumbnail on the interface of the mobile phone. FIG. 3A(1), FIG. 3A(2), FIG. 3A(3), FIG. 3B(1), FIG. 3B(2), FIG. 3B(3), FIG. 3C(1), FIG. 3C(2), FIG. 3D(1), FIG. 3D(2), FIG. 3D(3), FIG. 3E(1), and FIG. 3E(2) show some example application scenarios related to a screenshot image thumbnail or a screen recording video thumbnail.

FIG. 3A(1), FIG. 3A(2), and FIG. 3A(3) are an example schematic diagram of a scenario of generation and disappearance of the screen recording video thumbnail. Referring to FIG. 3A(1), in an example, after a mobile phone starts screen recording, a user performs a tapping operation on a screen recording prompt control 301 to end screen recording. Optionally, the user may end screen recording in a manner such as tapping a shortcut switch, pressing a combination of buttons, a space gesture, or voice control. This is not limited in this embodiment of this application. In response to the operation of the user, the mobile phone ends the screen recording operation, saves the screen recording video, and generates a thumbnail 302 corresponding to the screen recording video, which is displayed on the interface of the mobile phone, as shown in FIG. 3A(2). After the screen recording video thumbnail 302 is displayed, the screen recording application starts to perform automatic disappearance timing (a timing duration may be 3s, 5s, or the like) for the screen recording video thumbnail 302. Before the automatic disappearance timing ends, if the user does not perform any operation on the screen recording video thumbnail 302, the mobile phone controls the screen recording video thumbnail 302 to automatically disappear from the display interface of the mobile phone, as shown in FIG. 3A(3).

FIG. 3B(1), FIG. 3B(2), and FIG. 3B(3) are an example schematic diagram of a scenario of generation and disappearance of the screenshot image thumbnail. Referring to FIG. 3B(1), for example, the user taps an interface 311 of a mobile phone by using a finger joint to trigger screenshot of the mobile phone. Optionally, the user may also trigger a screenshot operation in a manner such as a space gesture, tapping a shortcut switch, and pressing a combination of buttons. This is not limited in this embodiment of this application. In response to the operation of the user, the mobile phone captures an image corresponding to a current display interface, saves the screenshot image, generates a thumbnail 312 corresponding to the screenshot image, and displays the thumbnail on the interface of the mobile phone, as shown in FIG. 3B(2). After the screenshot image thumbnail 312 is displayed, the screenshot application starts automatic disappearance timing (the timing duration may be 3s, 5s, or the like) for the screenshot image thumbnail 312. Before the automatic disappearance timing ends, if the user does not perform any operation on the screenshot image thumbnail 312, the mobile phone controls the screenshot image thumbnail 312 to automatically disappear from the display interface of the mobile phone, as shown in FIG. 3B(3).

FIG. 3C(1) and FIG. 3C(2) show an example scenario of operating the screenshot image thumbnail. Using the screenshot image thumbnail as an example, referring to FIG. 3C(1), the user taps a screenshot image thumbnail 321. In response to the user operation, the mobile phone displays a screenshot image editing interface, as shown in FIG. 3C(2). In the editing interface, the user may perform operations such as editing or deleting on the screenshot image.

Using the screenshot image thumbnail as an example, FIG. 3D(1), FIG. 3D(2), and FIG. 3D(3) show another example scenario in which an operation is performed on the screenshot image thumbnail. Referring to FIG. 3D(1), the user swipes up on a screenshot image thumbnail 331. In response to the user operation, the mobile phone displays prompt information "Share" 332 at an upper end of the screenshot image thumbnail 331. When the user still swipes up and releases (or referred to as loosen), the mobile phone displays a sharing interface of the screenshot image, as shown in FIG. 3D(3). In the sharing interface, the user may send a screenshot image 333 corresponding to the screenshot image thumbnail 331 to a certain application (for example, TikTok, Pailitao, Notes, or Email). Then, the user may perform a related operation (for example, share the screenshot image to a friend, publish the screenshot image to a platform, store the screenshot image, or print the screenshot image) on the screenshot image 333 through the application.

Using the screenshot image thumbnail as an example, FIG. 3E(1) and FIG. 3E(2) show yet another example operation scenario of the screenshot image thumbnail. Referring to FIG. 3E(1), the user swipes down on a screenshot image thumbnail 341. In response to the user operation, the mobile phone displays prompt information "Scroll screenshot" 342 at a lower end of the screenshot image thumbnail 341. When the user still swipes down and releases, if the current interface of the mobile phone supports downward scrolling, the current interface of the mobile phone scrolls downward, and a scrolling screenshot operation is performed, so as to obtain a corresponding long screenshot image.

For the screen recording video thumbnail, the user may edit or delete the thumbnail through a tapping operation, or share the thumbnail through a swipe-up operation. Details are not described in this embodiment of this application.

Embodiments of this application provide a data transmission method based on touch and hold and drag on the thumbnail (the screenshot image thumbnail or the screen recording video thumbnail), which is simple and convenient to operate, thereby improving use experience of a user. The user touches and holds and drags the thumbnail to a target application (or a target hotspot) and releases the thumbnail. In response to the user operation, the target application may receive an image or a video corresponding to the thumbnail, so as to implement transmission of resource data between applications. It should be noted that the target application refers to an application that can respond to a data dragging and transmitting operation, for example, a global favorites application or a note application.

In this way, after the screen recording is completed or the screenshot is performed, when the related thumbnail (the screen recording video thumbnail or the screenshot image thumbnail) is displayed on the interface of the mobile phone, the user can quickly transmit the resource data corresponding to the thumbnail to another application or service by dragging the thumbnail on the user interface.

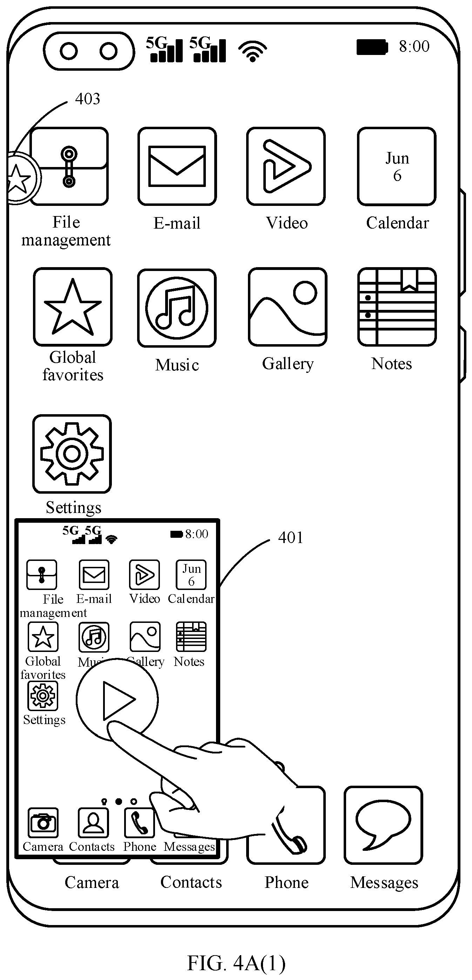

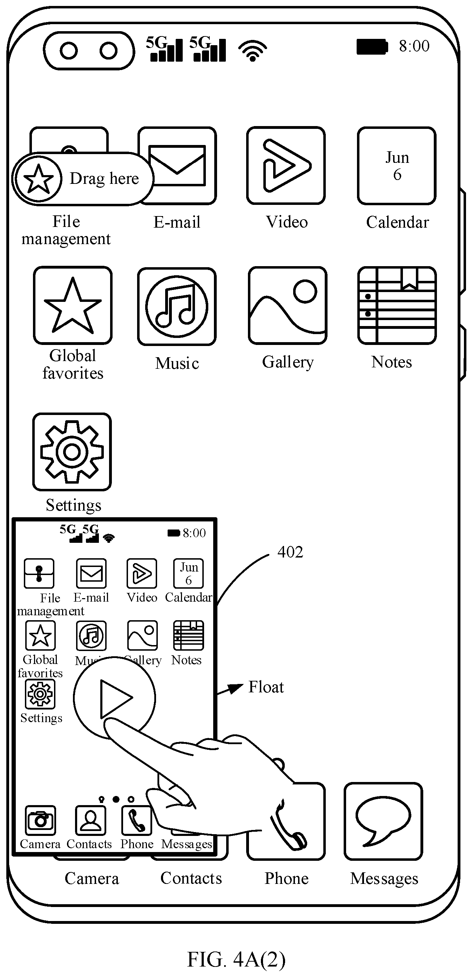

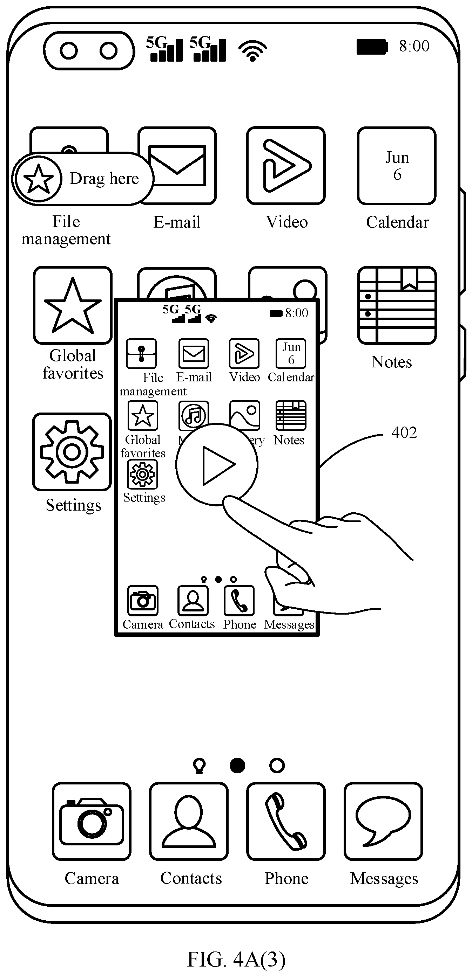

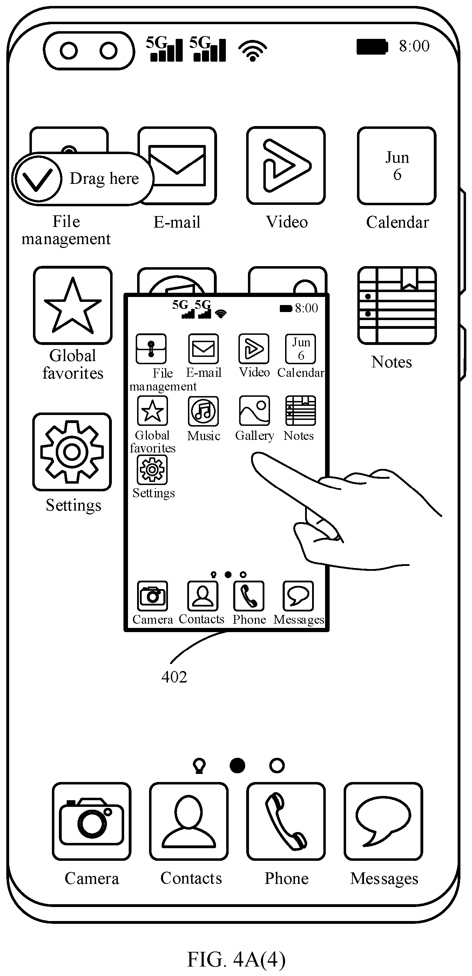

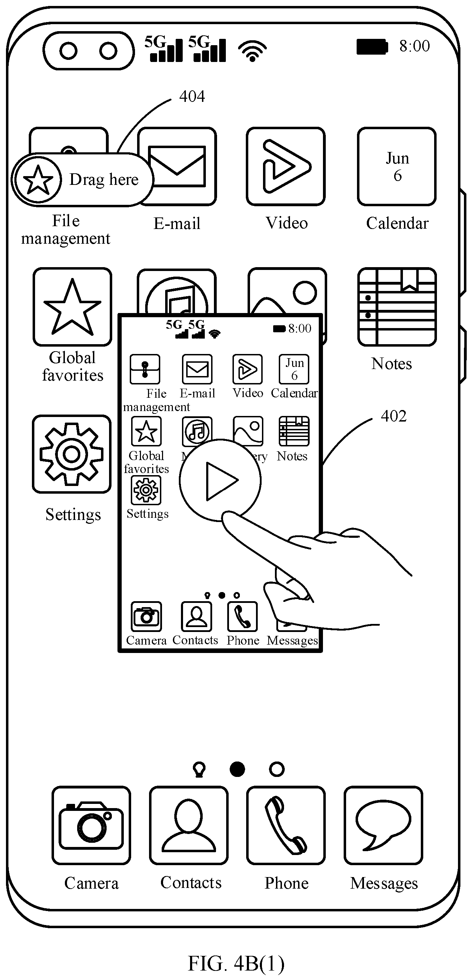

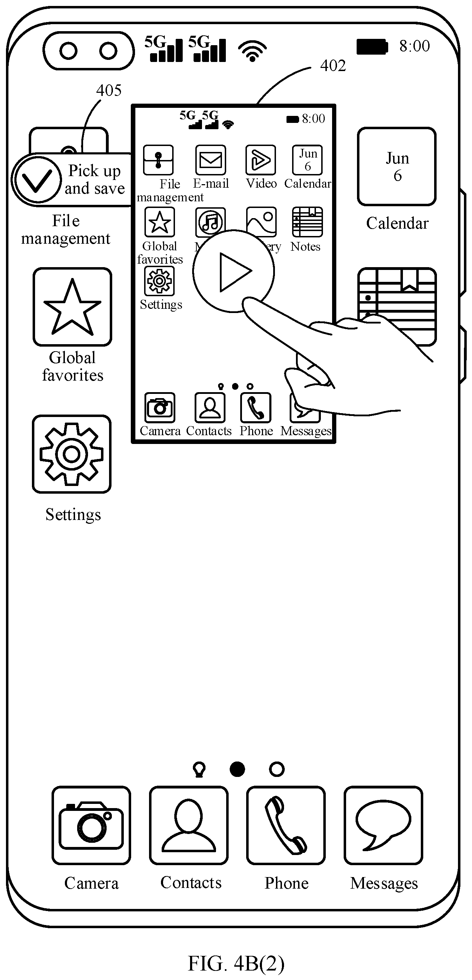

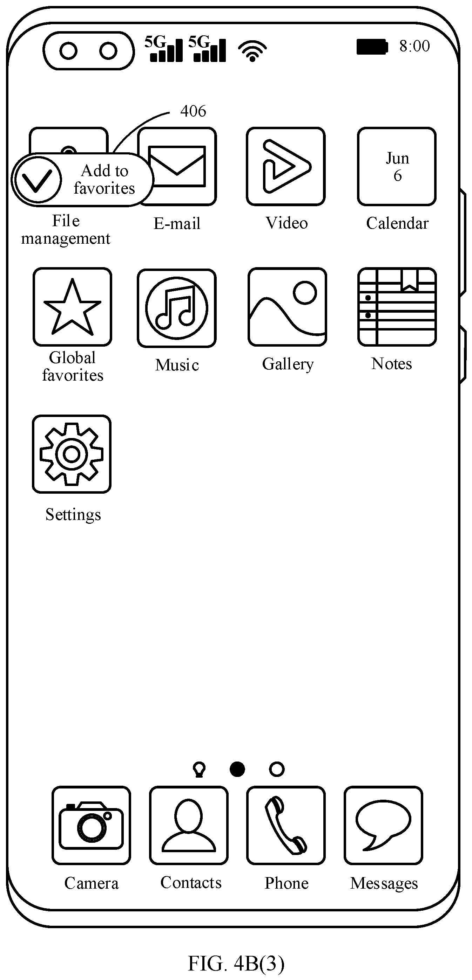

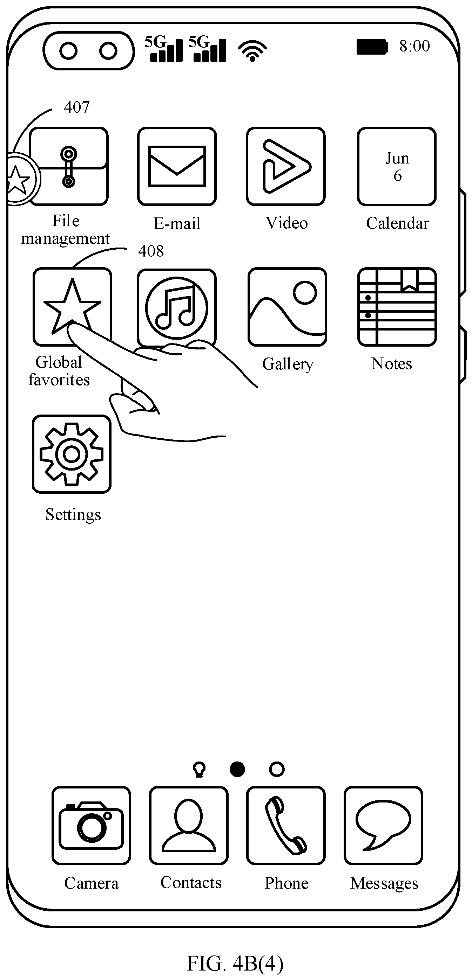

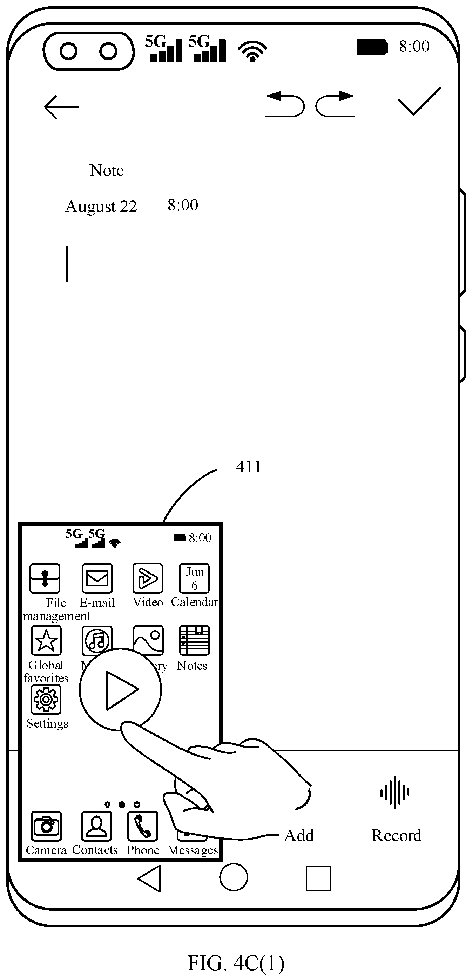

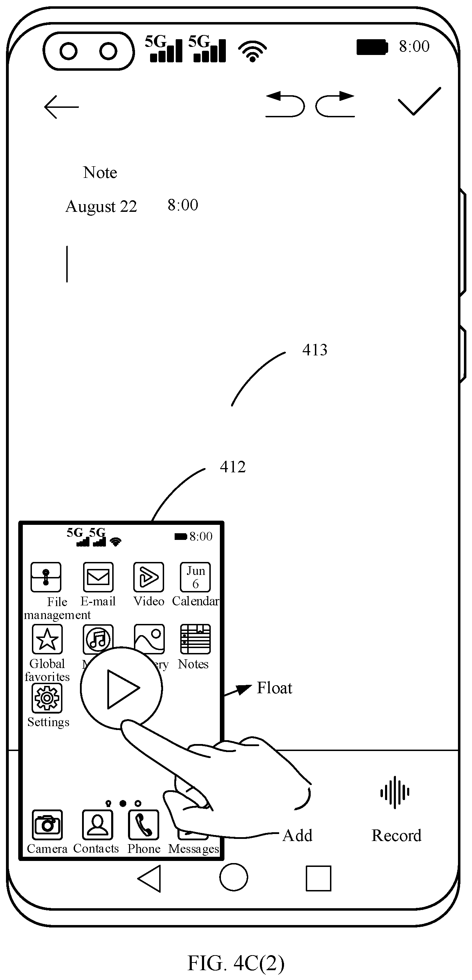

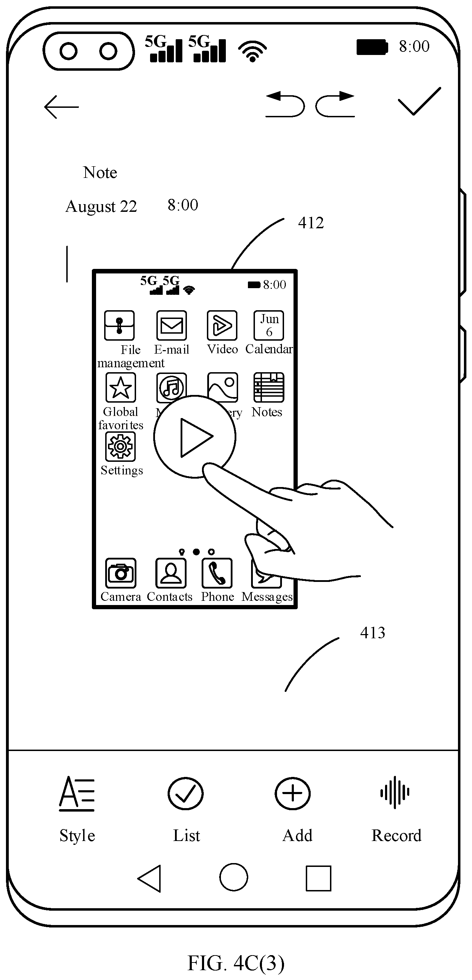

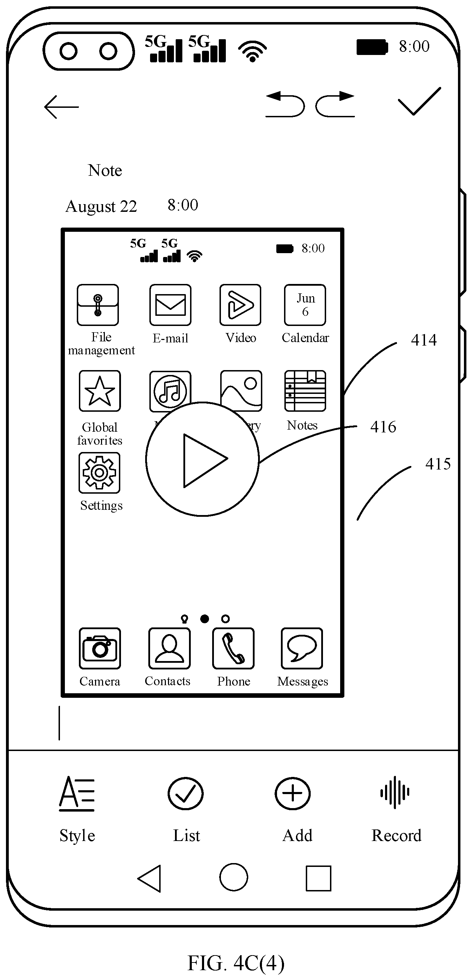

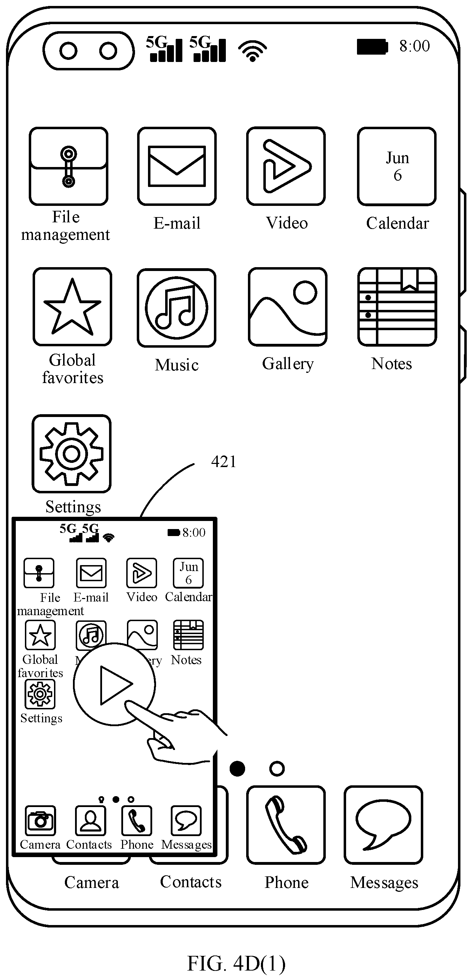

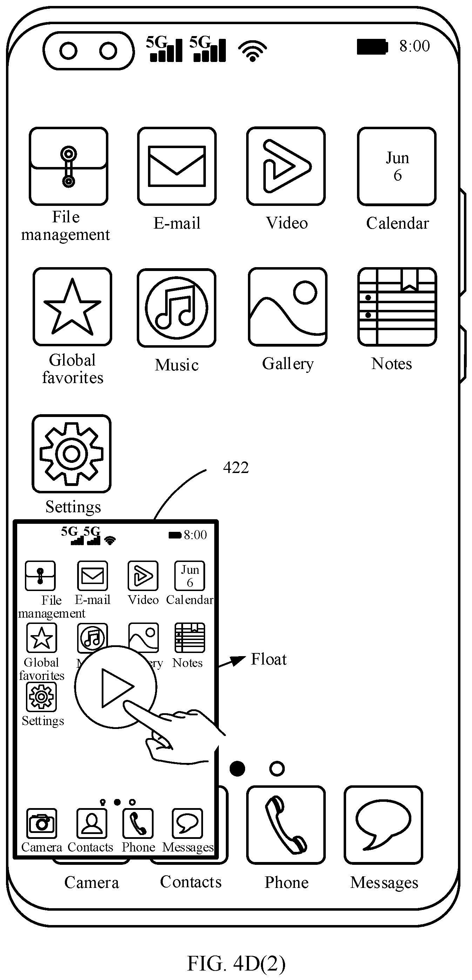

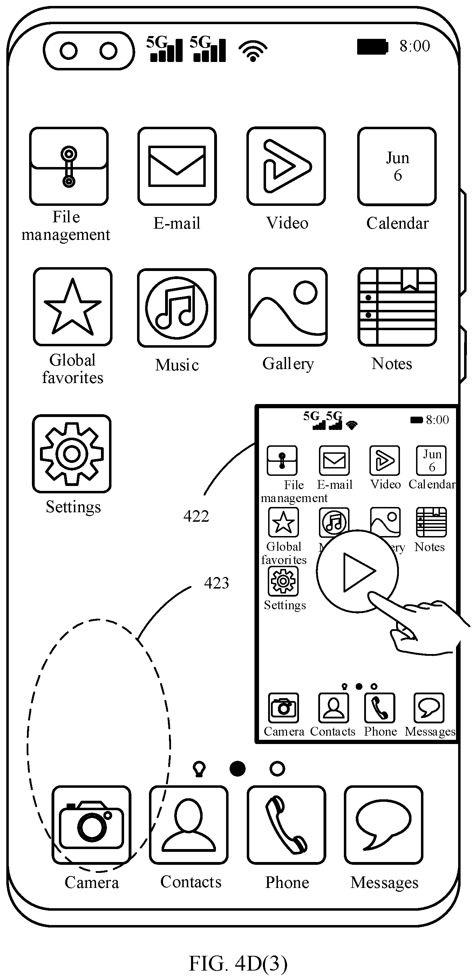

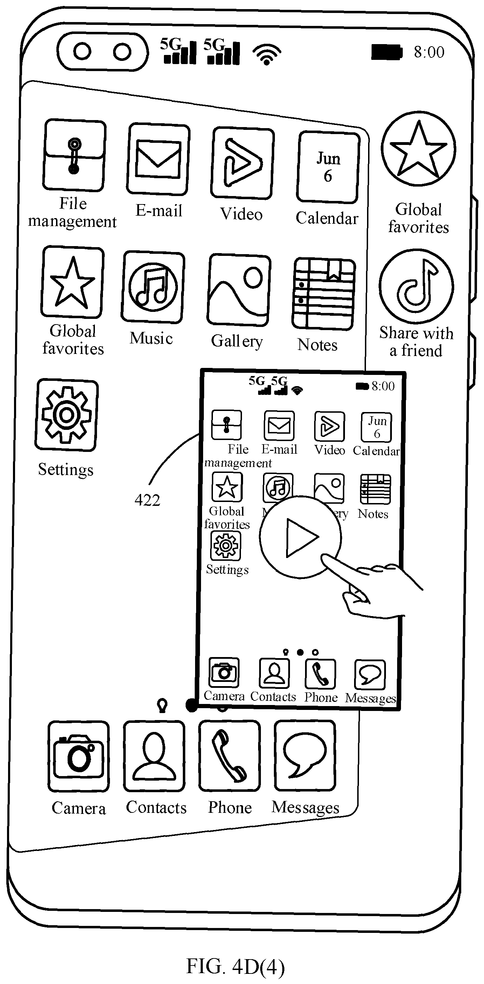

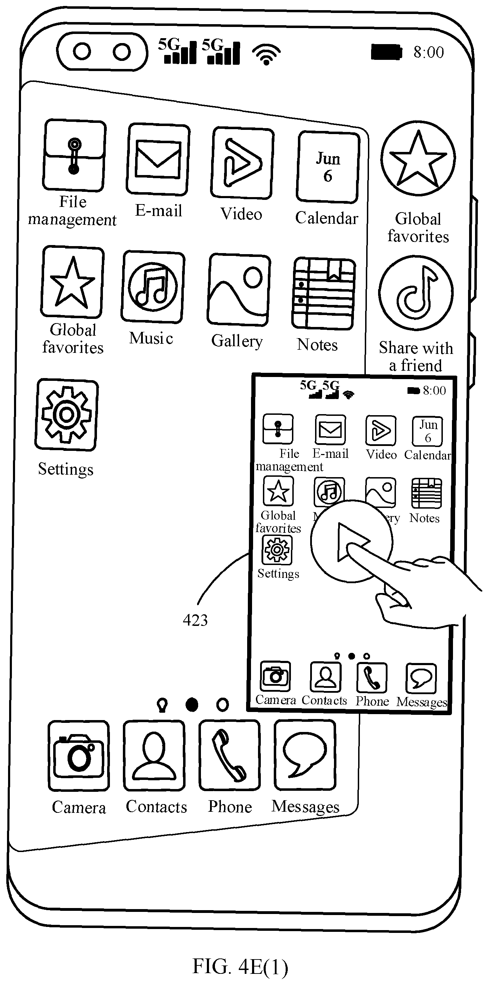

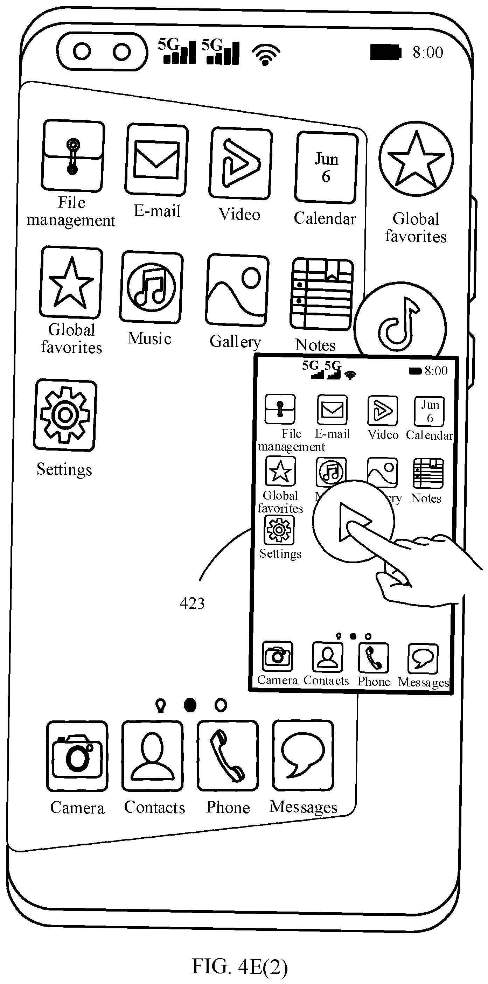

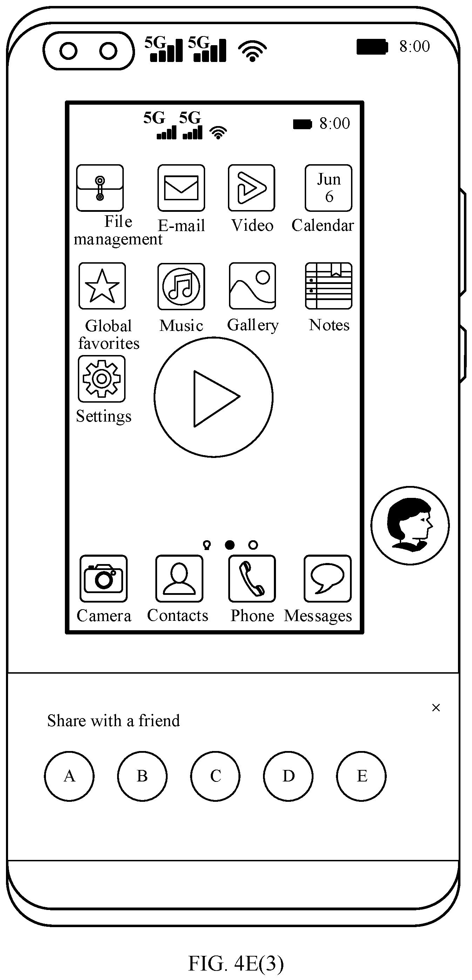

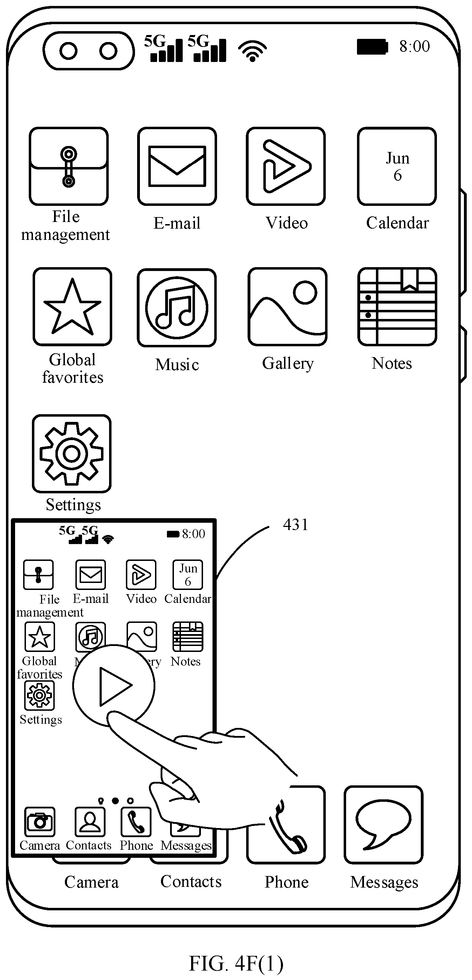

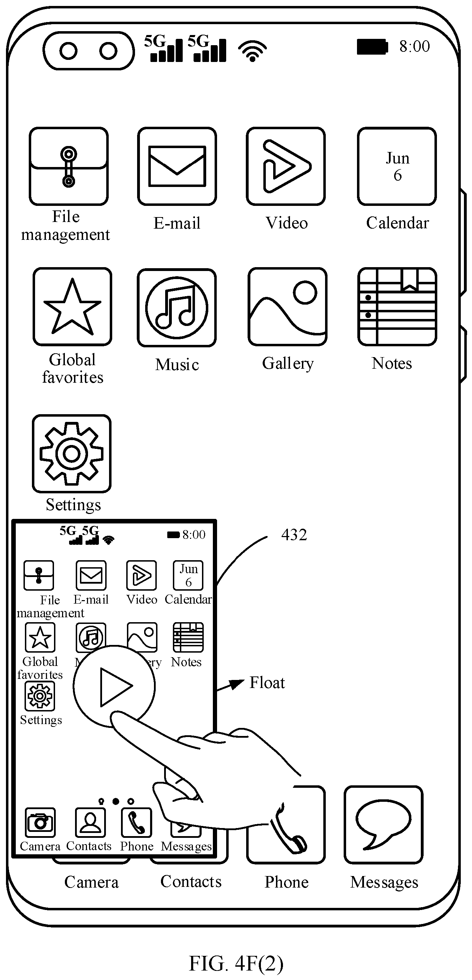

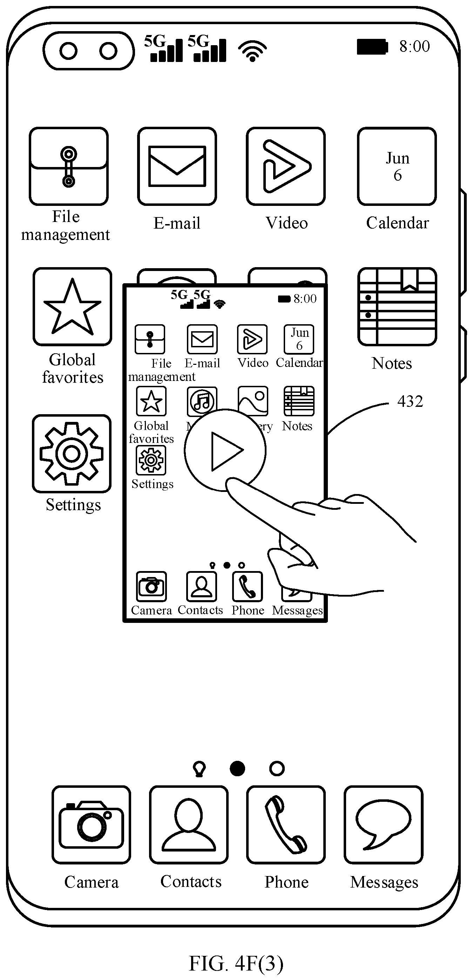

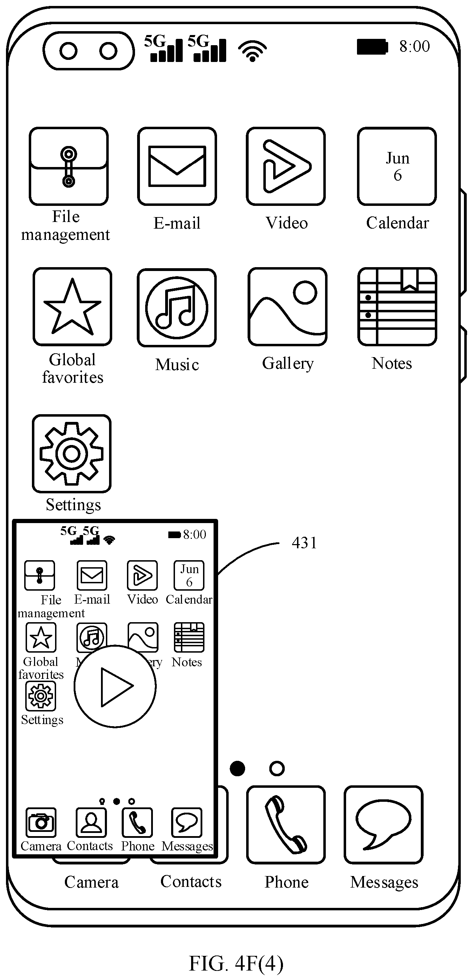

To enable a person skilled in the art better understand the data transmission method in embodiments of this application, a user operation method is described with reference to FIG. 4A(1), FIG. 4A(2), FIG. 4A(3), FIG. 4A(4), FIG. 4B(1), FIG. 4B(2), FIG. 4B(3), FIG. 4B(4), FIG. 4C(1), FIG. 4C(2), FIG. 4C(3), FIG. 4C(4), FIG. 4D(1), FIG. 4D(2), FIG. 4D(3), FIG. 4D(4), FIG. 4E(1), FIG. 4E(2), FIG. 4E(3), FIG. 4F(1), FIG. 4F(2), FIG. 4F(3), and FIG. 4F(4). In FIG. 4A(1), FIG. 4A(2), FIG. 4A(3), FIG. 4A(4), FIG. 4B(1), FIG. 4B(2), FIG. 4B(3), FIG. 4B(4), FIG. 4C(1), FIG. 4C(2), FIG. 4C(3), FIG. 4C(4), FIG. 4D(1), FIG. 4D(2), FIG. 4D(3), FIG. 4D(4), FIG. 4E(1), FIG. 4E(2), FIG. 4E(3), FIG. 4F(1), FIG. 4F(2), FIG. 4F(3), and FIG. 4F(4), a scenario in which the thumbnail is touched and held and dragged is described by using a screen recording video thumbnail as an example.

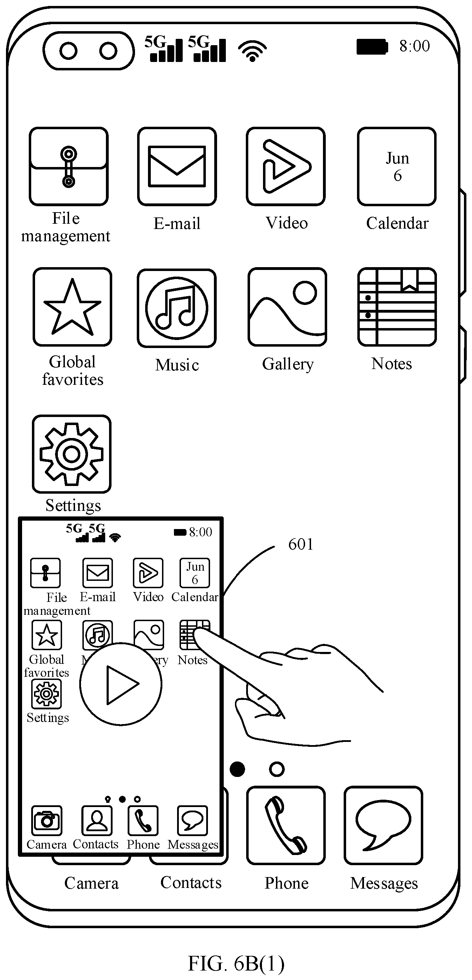

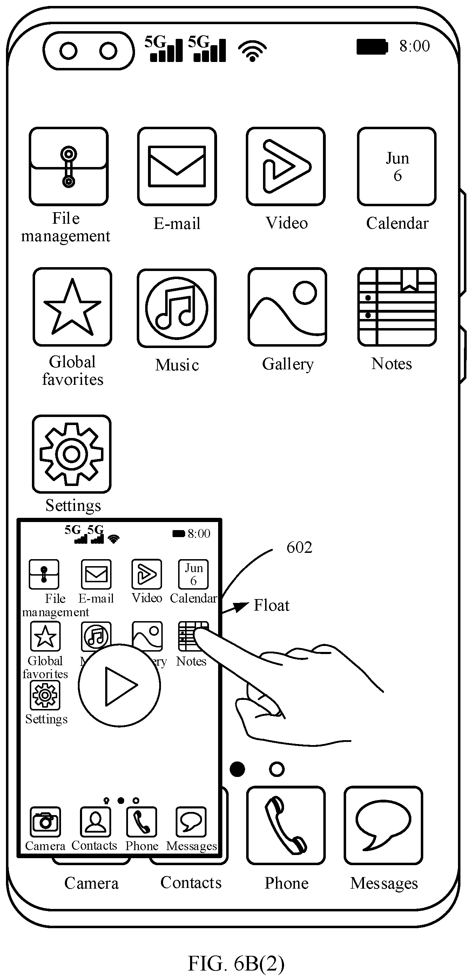

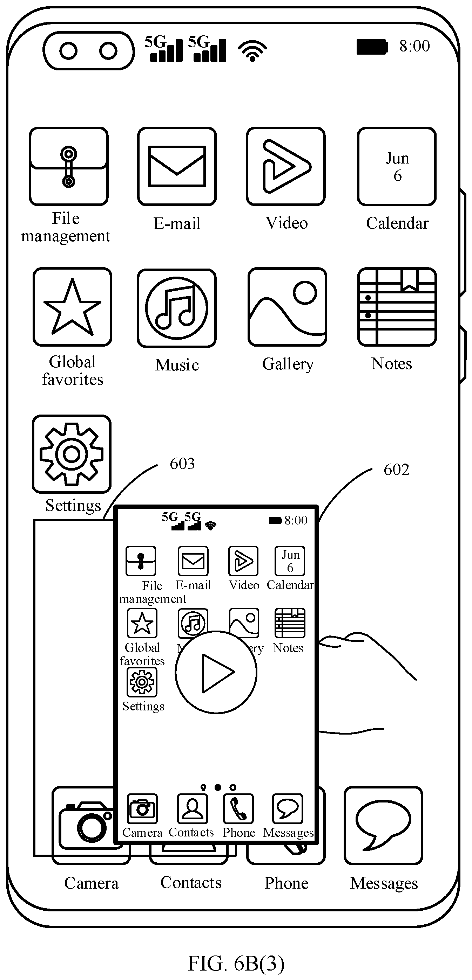

As shown in FIG. 4A(1), after screen recording ends, a screen recording video thumbnail 401 is displayed on an interface of the mobile phone. The user touches and holds the screen recording video thumbnail 401. In response to the user operation, a screen recording video thumbnail 402 floats, and the floating screen recording video thumbnail 402 can be dragged by the user. The screen recording video thumbnail being "floating" is a user visual experience of a gesture animation (not shown in the figure) of the screen recording video thumbnail, just like the screen recording video thumbnail being "floating" on a desktop interface. The gesture animation is used for prompting a user that the screen recording video thumbnail may be dragged, namely, used for prompting that the screen recording video thumbnail may move with a finger of the user. To further improve user experience, the gesture animation may also include two parts. First, the screen recording video thumbnail is visually floated, and second, a position of the screen recording video thumbnail is moved, so that the finger of the user is located in a central region of the screen recording video thumbnail (reference may be made to a related description of FIG. 6B(1), FIG. 6B(2), and FIG. 6B(3) below).

The animation effect of "floating" may be implemented in various methods. For example, the screen recording video thumbnail 402 may be zoomed in or out, a shadow is added to the screen recording video thumbnail 402, and a frame of the screen recording video thumbnail 402 is adjusted, or a combination of the above or a plurality of other manners may be used. To distinguish the one from the screen recording video thumbnail 401 that is not floated originally displayed in the interface of the mobile phone, in this embodiment, the screen recording video thumbnail that is floated and draggable is referred to as the screen recording video thumbnail 402, as shown in FIG. 4A(2). Compared with the screen recording video thumbnail 401, a size, a frame, a shadow, and the like of the screen recording video thumbnail 402 may be different (not shown in the figure). Still referring to FIG. 4A(3) and FIG. 4A(4), the user may randomly drag the screen recording video thumbnail 402 on the display interface of the mobile phone.

It should be noted that, for "the floating of the screen recording video thumbnail" in other drawings below, reference may be made to the related description in the foregoing paragraph. Details are not described below.

In an implementation, when the target application is displayed in a form of a floating ball, the target application may respond to a data dragging and transmitting operation. An example in which the user drags the screen recording video thumbnail to the floating ball of a global favorites application, and stores the screen recording video corresponding to the screen recording video thumbnail to the global favorites application is used below. It may be understood that the screen recording video corresponding to the screen recording video thumbnail is the screen recording video described by the screen recording video thumbnail.

Still referring to FIG. 4B(1), when the user drags the screen recording video thumbnail 402, because the global favorites application can respond to the data dragging and transmitting operation, a floating ball icon of the global favorites application changes from a folded floating ball 403 (referring to FIG. 4A(1)) to an expanded floating ball 404. To prompt the user for an operation, the expanded floating ball 404 displays prompt information "Drag here". Still referring to FIG. 4B(2), the user still drags the screen recording video thumbnail 402 to the floating ball of the global favorites application. In other words, the screen recording video thumbnail 402 is dragged into the range of the hotspot corresponding to the floating ball of the global favorites application. In response to the operation of the user, the prompt information on the floating ball of the global favorites application changes to "Collect with hands up", as shown in the expanded floating ball 405. After the user drags the screen recording video thumbnail 402 to the expanded floating ball 405, the user releases the thumbnail (namely, the finger leaves the display screen of the mobile phone). In response to the releasing operation of the user, the screen recording video thumbnail 402 disappears from the interface (or referred to as being undisplayed), and the mobile phone transmits the screen recording video corresponding to the screen recording video thumbnail 402 to the global favorites application. The global favorites application receives the screen recording video corresponding to the screen recording video thumbnail 402 and adds the screen recording video to the global favorites application. The prompt information on the floating ball of the global favorites application changes to "Successfully collected". Reference may be made to an expanded floating ball 406 displayed in the interface of FIG. 4B(3). In this case, the data transmission of the screen recording video corresponding to the screen recording video thumbnail 402 is completed. In other words, the user drags the screen recording video thumbnail 402, and transmits the screen recording video corresponding to the screen recording video thumbnail to the global favorites application. In this case, the floating ball of the global favorites application may be restored to the folded state. Reference may be made to the folded floating ball 407 displayed in the interface of FIG. 4B(4). Because the screen recording video corresponding to the screen recording video thumbnail 402 has been collected into the global favorites application, when the user taps an application icon 408 of the global favorites application to open the global favorites application, the user may view the screen recording video corresponding to the screen recording video thumbnail 402 in a related interface of the global favorites application.

Optionally, when the global favorites application is not installed in the mobile phone, if the user drags the screen recording video thumbnail 402 into the range of the hotspot corresponding to the floating ball of the note application (or the range of the hotspot corresponding to the note application) and releases the thumbnail, the screen recording video corresponding to the screen recording video thumbnail 402 is transmitted to the note application in response to the user operation, and the screen recording video thumbnail 402 disappears from the interface. In this way, when the user opens a note application, the user can view the screen recording video corresponding to the screen recording video thumbnail 402 in a related interface of the note application.

It should be noted that, that the screen recording video thumbnail 402 disappears from the interface may be understood as that the mobile phone undisplays the screen recording video thumbnail 402.

In an implementation, when the target application is started and displays the application interface (for example, an editable interface) thereof, the target application may respond to the data dragging and transmitting operation. An example in which the user drags the screen recording video thumbnail to the editable interface of the note application, and adds the screen recording video corresponding to the screen recording video thumbnail to a note is used below.

As shown in FIG. 4C(1), after screen recording ends, a screen recording video thumbnail 411 is displayed on an interface of the mobile phone. Still referring to FIG. 4C(1), when the screen recording video thumbnail 411 is displayed, the interface of the mobile phone is the editable interface of the note application. The operation that the user starts the editable interface of the note application may be performed before the recording on the screen ends, or may be performed after the recording on the screen ends and before the screen recording video thumbnail 411 disappears. This is not limited in this embodiment. Still referring to FIG. 4C(1), the user touches and holds the screen recording video thumbnail 411. In response to the user operation, a screen recording video thumbnail 412 floats, and the floating screen recording video thumbnail 412 can be dragged by the user. To distinguish the one from the screen recording video thumbnail 411 that is not floated originally displayed in the interface of the mobile phone, in this embodiment, the screen recording video thumbnail that is floated and draggable is referred to as the screen recording video thumbnail 412, as shown in FIG. 4C(2). Still referring to FIG. 4C(2) and FIG. 4C(3), the user may randomly drag the screen recording video thumbnail 412 on the display interface 413 (namely, the editable interface of the note application) of the mobile phone. In an example, the user may drag the screen recording video thumbnail 412 to an editable region of the editable interface of the note application and then releases the thumbnail. In response to the user operation, the screen recording video thumbnail 412 disappears (or referred to as being undisplayed) from the interface. The mobile phone transmits the screen recording video corresponding to the screen recording video thumbnail 412 to the note application. The note application receives a screen recording video 414 corresponding to the screen recording video thumbnail 412, and adds the screen recording video 414 to an editable interface 415 of the note application, as shown in FIG. 4C(4). In this case, the data transmission of the screen recording video corresponding to the screen recording video thumbnail 412 is completed. In other words, the user drags the screen recording video thumbnail 412, and transmits the screen recording video corresponding to the screen recording video thumbnail to the note application. Still referring to FIG. 4C(4), if the user taps a switch control 416 of the screen recording video 414, in response to the user operation, the note application may invoke a relevant video player to play the screen recording video 414.

In an implementation, the target application resides on a desktop, is triggered to start by a related operation (such as a dragging operation), and bears a function of a relay station for data transmission. In addition, the target application may also respond to the data dragging and transmitting operation. An example in which the user drags the screen recording video thumbnail to a specified application, and transmits the screen recording video corresponding to the screen recording video thumbnail to a video sharing application by using the specified application is used below. The specified application may be understood as the relay station for data transmission, which may transmit the data received by the specified application to an application or a service of the application registered in the specified application. It may be understood that the application or the service of the application displayed in the interface of the specified application is an application or a service of the application that has been registered in the specified application.

As shown in FIG. 4D(1), after screen recording ends, a screen recording video thumbnail 421 is displayed on an interface of the mobile phone. The user touches and holds the screen recording video thumbnail 421. In response to the user operation, a screen recording video thumbnail 422 floats, and the floating screen recording video thumbnail 422 can be dragged by the user. To distinguish the one from the screen recording video thumbnail 421 that is not floated originally displayed in the interface of the mobile phone, in this embodiment, the screen recording video thumbnail that is floated and draggable is referred to as the screen recording video thumbnail 422, as shown in FIG. 4D(2). The user may randomly drag the screen recording video thumbnail 422 on the display interface of the mobile phone. In an example, the user drags resource data (such as image data, video data, file data, and text data) to a hotspot (for example, a hotspot arranged in a right edge region of the desktop, or a hotspot arranged in a left edge region of the desktop) of a preset position on the desktop of the mobile phone, which may trigger the specified application to be started. In an example, as shown in FIG. 4D(3), the user drags the screen recording video thumbnail 422 to the hotspot of the right edge region of the desktop of the mobile phone. In response to the user operation, the specified application is started, and the mobile phone displays the interface of the specified application. Reference may be made to the interface shown in FIG. 4D(4). In this case, the user may drag the screen recording video thumbnail 422 to any service icon displayed on the interface of the specified application. The service icon may be the same as the application icon of the application to which the service belongs, or may be different from the application icon of the application to which the service belongs. This is not limited in this embodiment. If a certain video sharing application registers a plurality of services thereof with the specified application, a service icon corresponding to each of the services may be separately displayed on the interface of the specified application. In an example, if a "Share with a friend" service and a "Post to a platform XX" service of a certain video sharing application are both registered with the specified application, a service icon 1 corresponding to the "Share with a friend" service, and a service icon 2 corresponding to the "Post to a platform XX" service are displayed on the interface of the specified application. Icon images of the service icon 1 and the service icon 2 may be the same or may be different. This is not limited in this embodiment.

Still referring to FIG. 4E(1), the user drags the screen recording video thumbnail 422 to the interface of the specified application. For better visual experience, the size of the screen recording video thumbnail 422 may be reduced, so that the screen recording video thumbnail may be completely displayed on the interface of the specified application, as shown by a screen recording video thumbnail 423. Still referring to FIG. 4E(2), the user drags the screen recording video thumbnail 423 to the service icon corresponding to the "Share with a friend" service of a certain video sharing application. In other words, the screen recording video thumbnail 423 is dragged by the user into the range of the hotspot of the "Share with a friend" service icon. In an example, in response to the user operation, the "Share with a friend" service icon becomes bigger, so as to prompt the user that the application service for receiving the video data has been selected. After the user drags the screen recording video thumbnail 423 to the "Share with a friend" service icon on the interface of the specified application, the user releases the thumbnail. In response to the releasing operation of the user, the screen recording video thumbnail 423 disappears (or referred to as being undisplayed) from the interface. The mobile phone transmits the screen recording video corresponding to the screen recording video thumbnail 423 to the specified application. The specified application receives the screen recording video corresponding to the screen recording video thumbnail 423, and transmits the screen recording video to the "Share with a friend" service in a certain video sharing application. In this case, the data transmission of the screen recording video corresponding to the screen recording video thumbnail 423 is completed. In other words, the user drags the screen recording video thumbnail 423, and transmits the screen recording video corresponding to the screen recording video thumbnail to the "Share with a friend" service in a certain video sharing application. In an example, after the user releases the thumbnail from, the interface of the mobile phone may jump to the "Share with a friend" service interface of the video sharing application, as shown in FIG. 4E(3). Still referring to FIG. 4E(3), in the "Share with a friend" service interface of the video sharing application, the screen recording video corresponding to the screen recording video thumbnail 423 is displayed. The user may play the screen recording video in this interface or share the screen recording video with one or more selected friends.

In an example, when the user drags the screen recording video thumbnail 423 onto another service icon (for example, a global favorites application icon) in the specified application and releases the thumbnail, the screen recording video thumbnail 423 disappears (or referred to as being undisplayed) from the interface. Prompt information such as "Successfully collected" or "Successfully transmitted" may also popped up on the mobile phone, to prompt the user that the video data transmission has been completed, and exit the interface of the specified application. In other words, after the user completes the dragging operation on the screen recording video thumbnail and releases the thumbnail, the change in the interface of the mobile phone is related to a receiving party of the screen recording video data. This is not limited in this embodiment.

Based on the above, when the user drags the screen recording video thumbnail or the screenshot image thumbnail, if the target application can respond to the data dragging and transmitting operation, the user may release the thumbnail at a relevant interface of the target application, and the screen recording video thumbnail or the screenshot image thumbnail disappears from the interface, thereby implementing transmission of the video data or the image data corresponding to the thumbnail to the target application.

It should be noted that in a process in which the screen recording video thumbnail or the screenshot image thumbnail is dragged, no thumbnail is displayed at the position on the display interface of the mobile phone where the screen recording video thumbnail or the screenshot image thumbnail is initially displayed. Using the scenario shown in FIG. 4D(1), FIG. 4D(2), FIG. 4D(3), FIG. 4D(4), FIG. 4E(1), FIG. 4E(2), and FIG. 4E(3) as an example, after the screen recording video thumbnail 422 is dragged, as shown in FIG. 4D(3), no thumbnail is displayed at a position region 423 in which the screen recording video thumbnail 421 (or the screen recording video thumbnail 422) is initially displayed. The same applies to the dragging scenario of the screen recording video thumbnail shown in FIG. 4A(1), FIG. 4A(2), FIG. 4A(3), FIG. 4A(4), FIG. 4B(1), FIG. 4B(2), FIG. 4B(3), and FIG. 4B(4) and the dragging scenario of the screen recording video thumbnail shown in FIG. 4C(1), FIG. 4C(2), FIG. 4C(3), FIG. 4C(4). Details are not described herein again.

It should be noted that when the user starts to drag the screen recording video thumbnail or the screenshot image thumbnail, the screen recording application cancels the automatic disappearance timing for dragging the screen recording video thumbnail, or the screenshot application cancels the automatic disappearance timing for the screenshot image thumbnail, to avoid being destroyed in a process in which the screen recording video thumbnail or the screenshot image thumbnail is dragged.

It should be further noted that when the user drags the screen recording video thumbnail or the screenshot image thumbnail, if the target application can respond to the data dragging and transmitting operation, but cannot normally affect the data dragging and transmitting operation currently due to a problem such as permission, the mobile phone may pop up, in response to the releasing operation of the user, a related prompt box to guide the user to resolve the problem such as the permission, and still perform an operation of transmitting the resource data corresponding to the thumbnail after the problem such as the permission is resolved when the user releases the thumbnail at a relevant interface of the target application. If the problem of permission is not resolved or the user refuses to resolve the problem of permission, it indicates that the resource data corresponding to the thumbnail cannot be successfully transmitted. In this case, the mobile phone resets displaying of the corresponding thumbnail. For a related description about reset displaying of the thumbnail, reference may be made to the following.

When the user drags the screen recording video thumbnail or the screenshot image thumbnail, if the target application cannot respond to the data dragging and transmitting operation, the screen recording video thumbnail is reset to be displayed in response to the releasing operation of the user when the user releases the thumbnail at a relevant interface of the target application. When the target application may respond to the data dragging and transmitting operation, if the user releases the thumbnail at a non-hotspot of the target application, the screen recording video thumbnail may also be reset to be displayed in response to the releasing operation of the user. In other words, if the user drags the screen recording video thumbnail to any non-hotspot and releases the thumbnail, the screen recording video thumbnail is reset to be displayed in response to the releasing operation of the user.

FIG. 4F(1), FIG. 4F(2), FIG. 4F(3), and FIG. 4F(4) are an example schematic diagram of a scenario of dragging and resetting a screen recording video thumbnail. As shown in FIG. 4F(1), after screen recording ends, a screen recording video thumbnail 431 is displayed at a lower left corner of an interface of the mobile phone. The user touches and holds the screen recording video thumbnail 431. In response to the user operation, a screen recording video thumbnail floats, and the floating screen recording video thumbnail can be dragged by the user. To distinguish the one from the screen recording video thumbnail 431 that is not floated originally displayed in the interface of the mobile phone, in this embodiment, the screen recording video thumbnail that is floated and draggable is referred to as the screen recording video thumbnail 432, as shown in FIG. 4F(2). Still referring to FIG. 4F(3), the user drags the screen recording video thumbnail 432 to a music application icon and releases the thumbnail. Because the music application cannot respond to the data dragging and transmitting operation, the screen recording application restores and displays the screen recording video thumbnail in response to the releasing operation of the user. When the screen recording video thumbnail is restored to be displayed, the screen recording video thumbnail 432 that is floated and draggable is moved back to an initial position and disappears, and a screen recording video thumbnail 431 that is not floated and draggable is redisplayed, as shown in FIG. 4F(4). It may be understood that the screen recording video thumbnail shown in FIG. 4F(4) is the same as the screen recording video thumbnail shown in FIG. 4F(1).

It should be noted that after a screen recording video thumbnail or a screenshot image thumbnail is reset to be displayed, the screen recording application starts the automatic disappearance timing for the screen recording video thumbnail again, or the screenshot application starts the automatic disappearance timing for the screenshot image thumbnail again.

In an optional implementation, after the user starts to drag the screen recording video thumbnail or the screenshot image thumbnail, the mobile phone displays a picture frame (or a line frame, and the like) at an original displaying position of the thumbnail. The picture frame may be configured to indicate a dragging start region of the thumbnail image, and may prompt the user visually, to prompt the user that stopping dragging the thumbnail in the picture frame region and releasing the thumbnail may cancel the dragging operation on the thumbnail. The shape of the picture frame may be the same as the shape of the thumbnail, or may be different from the shape of the thumbnail. This is not limited in this embodiment. The size of the picture frame may be the same as the size of the thumbnail, or may be different from the size of the thumbnail (for example, the size of the picture frame is smaller than the size of the thumbnail). This is not limited in this embodiment.

If the user drags the screen recording video thumbnail (or the screenshot image thumbnail) into the picture frame region and releases the thumbnail to cancel the dragging operation on the thumbnail, the screen recording application (or the screenshot application) resets displaying of the screen recording video thumbnail (or the screenshot image thumbnail) in response to the user operation. After the screen recording video thumbnail (or the screenshot image thumbnail) is reset to be displayed, the screen recording application (or the screenshot application) restarts the automatic disappearance timing for the screen recording video thumbnail (or the screenshot image thumbnail). Before the automatic disappearance timing ends (namely, before the thumbnail disappears), the user may further trigger the draggable function of the thumbnail through a touch and hold operation.

As shown in FIG. 4G(1), after screen recording ends, a screen recording video thumbnail 441 is displayed at a lower left corner of an interface of the mobile phone. The user touches and holds the screen recording video thumbnail 441. In response to the user operation, a screen recording video thumbnail floats, and the floating screen recording video thumbnail can be dragged by the user. To distinguish the one from the screen recording video thumbnail 441 that is not floated originally displayed in the interface of the mobile phone, in this embodiment, the screen recording video thumbnail that is floated and draggable is referred to as the screen recording video thumbnail 442, as shown in FIG. 4G(2). Still referring to FIG. 4G(3), the user starts to drag the screen recording video thumbnail 442. In response to the dragging operation of the user, the mobile phone displays a picture frame 443 at an original position of the screen recording video thumbnail 442. The shape of the picture frame 443 may be the same as the shape of the screen recording video thumbnail 442, and is rectangular. Alternatively, the shape of the picture frame 443 may be different from the shape of the screen recording video thumbnail 442. For example, the shape of the picture frame 443 may be square, circular, or the like. This is not limited in this embodiment. The size of the picture frame 443 may be the same as the size of the screen recording video thumbnail 442, or may be different from the size of the screen recording video thumbnail 442 (for example, the size of the picture frame 443 is slightly smaller than the size of the screen recording video thumbnail 442). This is not limited in this embodiment. The picture frame 443 may be configured to prompt the user that stopping dragging the thumbnail and releasing the thumbnail in the picture frame region may cancel the dragging operation on the thumbnail. Still referring to FIG. 4G(4), the user still drags the screen recording video thumbnail 442 away from the original position. If no intersection set exists between the screen recording video thumbnail 442 and the picture frame 443, the mobile phone undisplays the picture frame 443. Still referring to FIG. 4H(1) and FIG. 4H(2), the user drags the screen recording video thumbnail 442 to the original position of the screen recording video thumbnail 442. If an intersection set exists between the screen recording video thumbnail 442 and the picture frame 443, the mobile phone redisplays the picture frame 443, to prompt the user that stopping dragging the screen recording video thumbnail 442 and releasing the thumbnail in the region of the picture frame 443 can cancel the dragging operation on the thumbnail. If the user stops dragging the screen recording video thumbnail 442 and releases the thumbnail in the region of the picture frame 443, the mobile phone resets the screen recording video thumbnail 442 to display in response to the operation of the user. Reference may be made to FIG. 4G(1).

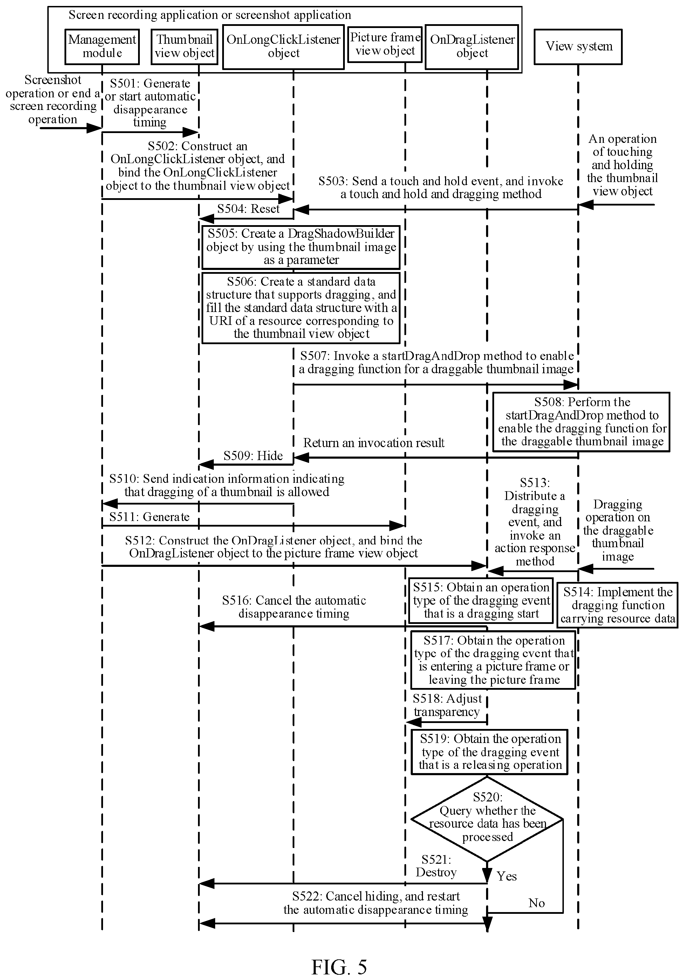

To enable the electronic device to implement the foregoing data transmission function based on touch and hold and drag on the thumbnail, FIG. 5 is an example schematic diagram of a module interaction process of an electronic device. As shown in FIG. 5, the data transmission method provided in embodiments of this application may include the following steps.

S501: A management module in a screenshot application (or a screen recording application) generates a thumbnail view object corresponding to a screenshot image (or a screen recording video) in response to a screenshot operation or a screen recording termination operation of a user, and starts automatic disappearance timing for the thumbnail view object.

In an example, the screenshot operation may be an operation of double-tapping a screen with a joint, an operation of tapping a shortcut switch, an operation of pressing a combination of buttons, or the like. In response to the screenshot operation of the user, the screenshot application stores the screenshot image into a gallery application and generates the thumbnail view object corresponding to the screenshot image. The thumbnail view object is displayed on a current display interface of an electronic device, for example, displayed at a lower left corner of the current display interface of the electronic device. Reference may be made to FIG. 3B(2).

In an example, the operation of ending screen recording may be an operation of tapping the screen recording prompt control (as shown in FIG. 3A(1)), or may be an operation of tapping the shortcut switch, an operation of pressing the combination of buttons, or the like. In response to the operation of ending screen recording performed by the user, the screen recording application stores the screen recording video into the gallery application and generates the thumbnail view object corresponding to the screen recording video. The thumbnail view object is displayed on a current display interface of an electronic device, for example, displayed at a lower left corner of the current display interface of the electronic device. Reference may be made to FIG. 3A(2).

In the following process, the thumbnail view object may refer to a screenshot image thumbnail view object or a screen recording video thumbnail view object. After any type of thumbnail view object is displayed on the current display interface of the electronic device, a management module of a corresponding application starts the automatic disappearance timing for the thumbnail view object. Before the automatic disappearance timing ends, if the user does not perform any operation on the thumbnail view object, the management module destroys the thumbnail view object, and the thumbnail view object automatically disappears from the display interface of the electronic device. Reference may be made to FIG. 3A(3) or FIG. 3B(3).

S502: The management module constructs an OnLongClickListener object, and binds the OnLongClickListener object to the thumbnail view object.

After the thumbnail view object is generated, the management module constructs an OnLongClickListener object for the thumbnail view object, and may bind the OnLongClickListener object to the thumbnail view object through a setOnLongClickListener (@Nullable OnLongClickListener 1) method.

S503: The view system sends a touch and hold event to the OnLongClickListener object in response to a touch and hold operation performed by the user on the thumbnail view object, and invokes a touch and hold and dragging method in the OnLongClickListener object.

When the user touches and holds the thumbnail view object (for example, reference may be made to FIG. 4A(1)), in response to the user operation, the view system sends a touch and hold event to the OnLongClickListener object bound to the thumbnail view object, and invokes an onLongClick (View v) method in the OnLongClickListener object to execute the logic for starting thumbnail dragging.

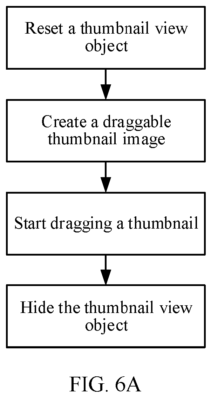

In this embodiment of this application, the processing logic for starting thumbnail dragging is defined in the onLongClick (View v) method of the OnLongClickListener object. Referring to FIG. 6A, the processing logic for starting thumbnail dragging is as follows: resetting the thumbnail view object, creating a draggable thumbnail image, starting dragging the thumbnail, and hiding the thumbnail view object. For a detailed explanation of the processing logic, reference may be made to the following related steps S504-S509. Details are not described herein again.

S504: The OnLongClickListener object resets the thumbnail view object.

Considering that in a process of touching and holding the thumbnail view object, the user may move the thumbnail view object, for example, swipe up or swipe down (which may refer to the scenario shown in FIG. 3D(1), FIG. 3D(2), FIG. 3D(3) FIG. 3E(1), and FIG. 3E(2)), to be compatible with a slide-up sharing scenario and a slide-down screenshot scenario for the thumbnail, in this embodiment, before starting dragging the thumbnail, the thumbnail view object needs to be reset first, so that a position of a subsequently created draggable thumbnail image is not offset.

The OnLongClickListener object resets the thumbnail view object, which means that the thumbnail view object is restored to an initial position. It may be understood that the initial position is a position at which the thumbnail view object is initially displayed after the screen recording application or the screenshot application generates the thumbnail view object.

In an example, the OnLongClickListener object may invoke an updateViewLayout method provided by a window manager (WindowManager) to reset the layout of the thumbnail view object, so that the thumbnail view object is restored to the initial position.

In an optional implementation, S504 may also be adjusted as the follows. The OnLongClickListener object sends indication information used for instructing to reset the thumbnail view object to the management module, and the management module resets the thumbnail view object based on the indication information. The management module may invoke the updateViewLayout method provided by the window manager (WindowManager) to reset the layout of the thumbnail view object, so that the thumbnail view object is restored to the initial position.

S505: The OnLongClickListener object creates a DragShadowBuilder object by using the thumbnail image as a parameter.

Because the thumbnail view object is not an image that supports a standard drag function of an Android system, to implement the foregoing thumbnail dragging scenario, a thumbnail image (which is referred to as a draggable thumbnail image for short) supporting the standard dragging function of the Android system needs to be created. To avoid affecting the visual experience of the user, an image picture corresponding to the thumbnail view object needs to be used as a parameter for the draggable thumbnail image, so that no difference exists between the draggable thumbnail image and the thumbnail view object in a visual effect of the user.

In this embodiment, the OnLongClickListener object creates a DragShadowBuilder object defined by the view system, so as to generate the draggable thumbnail image through the view system. A creating parameter of the DragShadowBuilder object is the thumbnail image. The DragShadowBuilder object may be configured to generate a DragShadow object. The type of the DragShadow object is a standard draggable image in the Android system, and may move with a finger of the user.

In this embodiment, the DragShadow object generated by the DragShadowBuilder object is the draggable thumbnail image corresponding to the thumbnail view object. The DragShadow object may be understood as a projection of the thumbnail view object. image pictures of the DragShadow object and the thumbnail view object are the same, and the two have the same visual effect.

It should be noted that an initial display position of the draggable thumbnail image may be a position to which the thumbnail view object is restored. In other words, the initial layout positions of the DragShadow object and the thumbnail view object are the same. Therefore, the user perceives, in visual experience, that the original thumbnail (namely, the thumbnail view object) is dragged.

S506: The OnLongClickListener object creates a data structure object that supports dragging, and fills the data structure object with a URI (Uniform Resource Identifier, URI) of the resource corresponding to the thumbnail view object.

The data structure object is configured to store data that needs to be transmitted. In this embodiment of this application, the data structure object is configured to store the URI of the resource corresponding to the thumbnail view object. When the thumbnail view object is the screenshot image thumbnail view object, the resource corresponding to the thumbnail view object is the screenshot image. When the thumbnail view object is the screen recording video thumbnail view object, the resource corresponding to the thumbnail view object is the screen recording video.

In an example, the data structure object may be a ClipData object.

S507: The OnLongClickListener object invokes a startDragAndDrop method to start dragging the draggable thumbnail image.

In this embodiment of this application, the dragging manner for the draggable thumbnail image is a data-carrying dragging manner. The data carried in the draggable image may be transmitted across processes. In this embodiment of this application, specifically, it refers to that the resource (namely, screenshot image data or screen recording video data) carried in the draggable thumbnail image may be transmitted across processes.

In an example, the OnLongClickListener object may invoke the startDragAndDrop method provided by the view system to start dragging the draggable thumbnail image. The parameters invoked by the startDragAndDrop method are the DragShadowBuilder object and the ClipData object.

In this case, the screenshot/screen recording application completes the preparatory work for the thumbnail image drag function. The subsequent implementation of the thumbnail image drag function is performed by the view system.

S508: The view (View) system performs the startDragAndDrop method to enable the dragging function for the draggable thumbnail image, and returns an invocation result to the OnLongClickListener object.

Under the invocation of the OnLongClickListener object, the view system performs the startDragAndDrop method, to enable a dragging function supporting carrying data for the draggable thumbnail image. In a process of performing the startDragAndDrop method, the view system generates the DragShadow object by using the DragShadowBuilder object, that is, generates the draggable thumbnail image. After the view system performs the startDragAndDrop method, the user may drag the draggable thumbnail image, and transmit the resource data through dragging. For example, reference may be made to FIG. 4A(1), FIG. 4A(2), FIG. 4A(3), FIG. 4A(4), FIG. 4B(1), FIG. 4B(2), FIG. 4B(3), and FIG. 4B(4).

In an example, the invocation result may be used for indicating whether the startDragAndDrop method is successfully performed, whether the startDragAndDrop method is successfully invoked, or the like.

After performing the startDragAndDrop method, the view system displays the gesture animation of the draggable thumbnail image. In other words, the thumbnail image floats as described above. It may be understood that the screen recording video thumbnail 402 in FIG. 4A(1), FIG. 4A(2), FIG. 4A(3), FIG. 4A(4), FIG. 4B(1), FIG. 4B(2), FIG. 4B(3), and FIG. 4B(4) is the draggable thumbnail image in this process, and the screen recording video thumbnail 401 is the thumbnail view object in this process. Similarly, the screen recording video thumbnail 412 in FIG. 4C(1), FIG. 4C(2), FIG. 4C(3), FIG. 4C(4) is the draggable thumbnail image in this process, and the screen recording video thumbnail 411 is the thumbnail view object in this process. The same applies to another accompany drawing. Details are not described herein again.

S509: The OnLongClickListener object hides the thumbnail view object.

In this embodiment of this application, when the user drags the thumbnail image, the thumbnail image is no longer displayed at the initial position at which the thumbnail image is displayed. Therefore, after the draggable thumbnail image is created, the OnLongClickListener object may hide the thumbnail view object, and in a process in which the draggable thumbnail image is dragged by the user, the thumbnail view object is no longer displayed.

Optionally, the OnLongClickListener object may hide the thumbnail view object by setting transparency. For example, the OnLongClickListener object may set the transparency of the thumbnail view object to 0 through a function setAlpha (0). In other words, the thumbnail view object is set to be in a fully transparent state.

Optionally, the OnLongClickListener object may hide the thumbnail view object by setting visibility. For example, the OnLongClickListener object may set the visibility of the thumbnail view object to invisible through a function setVisibility (View.GONE).

Optionally, the OnLongClickListener object may hide the thumbnail view object by adjusting the size of the thumbnail view object. For example, the OnLongClickListener object may invoke the updateViewLayout method provided by the window manager (WindowManager) to set both the length and width of the thumbnail view object to 0, so that the thumbnail view object is invisible. Before the size of the thumbnail view object is adjusted by the OnLongClickListener object, the original size of the thumbnail view object needs to be recorded, so that the thumbnail view object can be subsequently restored.

In an optional implementation, S509 may also be adjusted as the follows. The OnLongClickListener object sends indication information used for instructing to hide the thumbnail view object to the management module, and the management module hides the thumbnail view object based on the indication information. The management module may hide the thumbnail view object by setting the transparency, hide the thumbnail view object by setting the visibility, or hide the thumbnail view object by adjusting the size of the thumbnail view object.

An execution sequence of S508 and S509 is not limited in this embodiment.

It should be noted that because the draggable thumbnail image is the DragShadow object corresponding to the thumbnail view object, the initial display position of the draggable thumbnail image is the same as the initial position of the thumbnail view object after the thumbnail view object is reset. After the thumbnail view object is hidden, if the draggable thumbnail image is moved or dragged by the user, no thumbnail image is displayed at the initial display position.

In an optional implementation, after the view system generates and displays the draggable thumbnail image, the view system may adjust the display position of the draggable thumbnail image based on a pressing position of the user, so that the pressing position of the user may be located at a central region of the draggable thumbnail image. For example, the display position of the draggable thumbnail image may be adjusted, so that the pressing position of the user is a central point of the draggable thumbnail image.

As shown in FIG. 6B(1), after the screen recording ends, a screen recording video thumbnail 601 (namely, a thumbnail view object) is displayed on the interface of the mobile phone. The user touches and holds the screen recording video thumbnail 601. In response to the user operation, the view system generates a draggable screen recording video thumbnail 602 at a position the same as that of the screen recording video thumbnail 601, and the screen recording video thumbnail 602 floats, so as to prompt the user that the screen recording video thumbnail 602 may be dragged. Still referring to FIG. 6B(2), because the pressing position of the user is not located in the central region of the screen recording video thumbnail 602, visual experience that the user drags the screen recording video thumbnail 602 is poor. In this case, the view system may automatically adjust the display position of the screen recording video thumbnail 602 based on the pressing position of the user, so that the pressing position of the user may be located at the central region of the screen recording video thumbnail 602, as shown in FIG. 6B(3). A process of adjusting the position of the screen recording video thumbnail 602 shown in FIG. 6B(2) and FIG. 6B(3) may be presented in a form of a position moving animation, to avoid affecting visual experience of the user due to instant movement of the position of the screen recording video thumbnail 602. It should be noted that referring to FIG. 6B(3), because the screen recording video thumbnail 601 is hidden, no thumbnail image is displayed at an initial display position of the screen recording video thumbnail 602. In addition, because an intersection set exists between the screen recording video thumbnail 602 and a picture frame 603, the picture frame 603 is shown in a form of non-transparency.

It may be learned by comparing FIG. 6B(2) with FIG. 6B(3) that, compared with dragging the screen recording video thumbnail 602 at an edge of the screen recording video thumbnail, the user has better operation experience of dragging the screen recording video thumbnail at the central region of the screen recording video thumbnail 602.

S510: The OnLongClickListener object sends indication information that dragging of the thumbnail is allowed to the management module.

The indication information that dragging of a thumbnail is allowed may be used for indicating that the dragging function of the draggable thumbnail image is enabled, and the user may perform a dragging operation on the draggable thumbnail image.

S511: The management module generates a picture frame view object.

After the dragging function of the draggable thumbnail image is enabled, the management module creates a picture frame view object corresponding to the thumbnail image at the initial position of the thumbnail view object. For the picture frame view object, for example, reference may be made to the picture frame 443 shown in FIG. 4G(3).

The shape of the picture frame view object may be the same as the shape of the thumbnail, or may be different from the shape of the thumbnail. This is not limited in this embodiment. The size of the picture frame view object may be the same as the size of the thumbnail, or may be different from the size of the thumbnail (for example, the size of the picture frame is smaller than the size of the thumbnail). This is not limited in this embodiment.

In this embodiment, the picture frame view object may be configured to visually prompt the user. The user is prompted that stopping dragging the thumbnail and releasing the thumbnail in a picture frame region may cancel the dragging operation on the thumbnail.

Optionally, the management module may alternatively pre-generate the picture frame view object when the thumbnail view object is generated. A timing of the generation of the picture frame view object is not limited in this embodiment.

In an optional implementation, the size of the picture frame view object is always the same as that of the thumbnail view object. When the management module hides the thumbnail view object by adjusting the size of the thumbnail view object, the management module also correspondingly adjusts the size of the picture frame view object, so as to hide the picture frame view object.

In this way, if a startup hotspot of the specified application is arranged in the left edge region of the desktop as shown in FIG. 4D(1), FIG. 4D(2), FIG. 4D(3), FIG. 4D(4), FIG. 4E(1), FIG. 4E(2), and FIG. 4E(3), the picture frame view object is hidden, and startup of the specified application is not affected.

S512: The management module constructs an OnDragListener object, and binds the OnDragListener object to the picture frame view object.

The OnDragListener object, which may also be referred to as a dragging (or referred to as moving) listener object, is configured to monitor a dragging action (or referred to as moving action) of the user on the draggable thumbnail image.

In this embodiment, the management module constructs the OnDragListener object, and may bind the OnDragListener object to the picture frame view object through a setOnDragListener (OnDragListener 1) method. In this way, the picture frame view object not only can function as a visual prompt, but also can sense the dragging event in a technical level.

Optionally, the OnDragListener object constructed by the management module may also be bound to another view object. This is not limited in this embodiment.

S513: The view system distributes the dragging event to the OnDragListener object in response to the dragging operation performed by the user on the draggable thumbnail image, and invokes an action response method in the OnDragListener object.

When the user drags the draggable thumbnail image (for example, reference may be made to FIG. 4A(3), FIG. 4A(4), FIG. 4B(1), and FIG. 4B(2)), in response to the user operation, the view system distributes the dragging event to the OnDragListener object, and invokes the action response method (onDrag (View, DragEvent)) in the OnDragListener object, to respond to the dragging/dropping operation of the user.

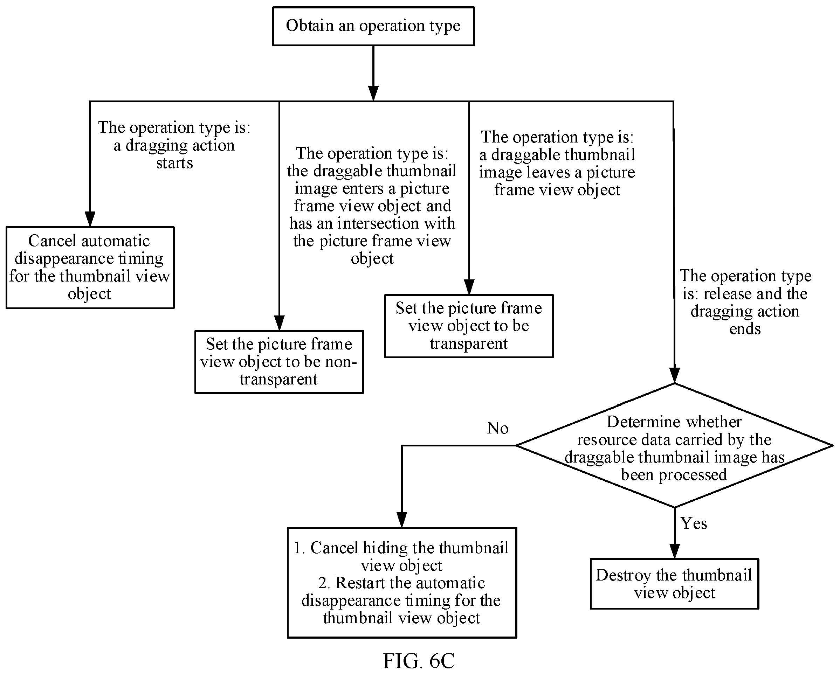

In this embodiment of this application, the processing logic for responding to dragging the draggable thumbnail image by the user is defined in the onDrag (View, DragEvent) method of the OnDragListener object. Referring to FIG. 6C, the processing logic of responding to dragging/dropping the draggable thumbnail image by the user is: obtaining an operation type of the user operation, and responding to the user operation based on an operation type. When the operation type indicates the dragging action starts, the automatic disappearance timing for the thumbnail view object is canceled. When the operation type indicates that the user releases and the dragging action ends, whether the resource data carried in the draggable thumbnail image is processed continues to be determined. If the resource data has been processed, the thumbnail view object is destroyed; otherwise, the hiding of the thumbnail view object is canceled, and the automatic disappearance timing for the thumbnail view object is restarted.

In a case that the management module does not adjust the size of the picture frame view object, when the operation type indicates that an intersection set exists between the draggable thumbnail image and the picture frame view object, namely, when the draggable thumbnail image enters the region corresponding to the picture frame view object, the picture frame view object is set to be non-transparent. When the operation type indicates that the draggable thumbnail image leaves the region corresponding to the picture frame view object and has no intersection with the picture frame view object, the picture frame view object is set to be transparent.

For a detailed explanation of the processing logic, reference may be made to the following related steps S515-S523. Details are not described herein again.

An execution sequence of S513 and S514-S520 is not limited in this embodiment of this application.

S514: The view system implements a dragging/dropping function carrying resource data for the draggable thumbnail image in response to the dragging operation performed by the user on the draggable thumbnail image.

When the user performs the dragging operation on the draggable thumbnail image, the view system may implement the dragging function carrying the resource data for the draggable thumbnail image, namely, implement the technical effect that the image can be dragged and the data can be transmitted.

When the user drags the draggable thumbnail image and does not release the thumbnail image, the view system implements, based on a drag-and-drop framework of an Android system, the effect that the draggable thumbnail image moves with the finger of the user. When the user releases the thumbnail image and ends the dragging operation, the view system determines, based on the drag-and-drop framework of the Android system, whether the resource data carried by the draggable thumbnail image can be processed, namely, whether the resource data can be transmitted to a target application. If the target application at a position where the user releases the thumbnail can respond to the data transmission through dragging, the view system transmits, based on the drag-and-drop framework of the Android system, the resource data carried by the draggable thumbnail image to the target application. In this case, the resource data carried by the draggable thumbnail image is processed; otherwise, the resource data carried by the draggable thumbnail image is not processed.

The drag-and-drop framework of the Android system is a native technology of the Android system, and the application can implement the drag-and-drop function carrying the resource data by invoking or accessing the drag-and-drop framework of the Android system.

After transmitting the resource data carried by the draggable thumbnail image to the target application, the view system may destroy the draggable thumbnail image. When the user releases the draggable thumbnail image and ends the dragging operation, if the resource data carried by the draggable thumbnail image is not processed, the view system may destroy the draggable thumbnail image after resetting the draggable thumbnail image (namely, restoring the draggable thumbnail image to an initial position). Optionally, when the user releases the draggable thumbnail image and ends the dragging operation, if the resource data carried by the draggable thumbnail image is not processed, the view system may also directly destroy the draggable thumbnail image.

It may be understood that, after the user releases the thumbnail image, it is indicated that the dragging operation ends. In this case, the view system may destroy the DragShadowBuilder object and the ClipData object. When the user touches and holds the thumbnail view object again, the OnLongClickListener object may recreate the DragShadowBuilder object and the ClipData object based on the thumbnail view object, to serve as the invoking parameters of the startDragAndDrop method provided by the View system.

S515: The OnDragListener object obtains an operation type of the dragging event that is a dragging start, and performs S516.

When the OnDragListener object performs the action response method, the OnDragListener object first obtains the operation type of the dragging event, namely, obtains the operation type of the user, and performs the corresponding operation based on the obtained operation type and the preset logic.

In an example, when the operation type is defined by the view system, the OnDragListener object may use a dragEvent.getAction () method to obtain the operation type of the user operation.

For example, the operation type "DragEvent.ACTION_DRAG_STARTED" indicates that the dragging action has started. When the OnDragListener object receives a dragging event whose operation type is "DragEvent.ACTION_DRAG_STARTED", it is determined that dragging of the user for the draggable thumbnail image starts.

S516: The OnDragListener object cancels the automatic disappearance timing for the thumbnail view object.

To prevent the thumbnail view object from automatically disappearing in a process in which the user drags the draggable thumbnail image, when the user starts to drag the draggable thumbnail image, the automatic disappearance timing for the thumbnail view object is first canceled.

The OnDragListener object may directly cancel the automatic disappearance timing for the thumbnail view object, or may send indication information to the management module, to instruct the management module to cancel the automatic disappearance timing for the thumbnail view object. The management module cancels the automatic disappearance timing for the thumbnail view object based on the indication information. This is not limited in this embodiment.

S517: The OnDragListener object obtains the operation type of the dragging event that is entering the picture frame or leaving the picture frame, and performs S518.

S518: The OnDragListener object adjusts the transparency of the picture frame view object.

The OnDragListener object obtains the operation type of the dragging event that is entering the picture frame, namely, the intersection set exists between the draggable thumbnail image and the region corresponding to the picture frame view object. The OnDragListener object sets the picture frame view object to be non-fully transparent (for example, non-transparent or semi-transparent). The OnDragListener object obtains the operation type of the dragging event that is leaving the picture frame, namely, no intersection set exists between the draggable thumbnail image and the region corresponding to the picture frame view object. The OnDragListener object sets the picture frame view object to be fully transparent.

For example, when the operation type "DragEvent.ACTION_DRAG_ENTERED" indicates that the draggable thumbnail image enters the region corresponding to the picture frame view object and has an intersection set with the picture frame view object, the operation type "DragEvent.ACTION_DRAG_EXITED" indicates that the draggable thumbnail image leaves the picture frame view object and has no intersection set with the picture frame view object.

When the OnDragListener object receives a dragging event whose operation type is "DragEvent.ACTION_DRAG_ENTERED", the OnDragListener object sets the picture frame view object to be non-transparent (for example, non-transparent or semi-transparent), to display the picture frame view object. Reference may be made to FIG. 4G(3). For example, the OnDragListener object may set the picture frame view object to be non-transparent by using the function setAlpha (1), so that the picture frame view object is displayed, thereby prompting the user.

When the OnDragListener object receives a dragging event whose operation type is "DragEvent.ACTION_DRAG_EXITED", the OnDragListener object sets the picture frame view object to be fully transparent. Reference may be made to FIG. 4H(4). For example, the OnDragListener object may set the picture frame view object to be fully transparent by using the function setAlpha (0), thereby hiding the picture frame view object.

In an optional implementation, S518 may also be adjusted as follows. The OnDragListener object sends indication information used for instructing to adjust the transparency of the picture frame view object to the management module, and the management module adjusts the transparency of the picture frame view object based on the indication information. When the OnDragListener object receives a dragging event whose operation type is "DragEvent.ACTION_DRAG_ENTERED", the OnDragListener object sends indication information for instructing to set the transparency of the picture frame view object to be non-fully transparent to the management module, and the management module sets the picture frame view object to be non-fully transparent based on the indication information. When the OnDragListener object receives a dragging event whose operation type is "DragEvent.ACTION_DRAG_EXITED", the OnDragListener object sends indication information for indicating to set the transparency of the picture frame view object to be fully transparent to the management module, and the management module sets the picture frame view object to be fully transparent based on the indication information.

It should be noted that if the size of the picture frame view object is adjusted, for example, both the length and width of the picture frame view object are adjusted to 0, S517-S518 may not be performed either.

S519: The OnDragListener object obtains the operation type of the dragging event that is a releasing operation, and performs S520.

For example, the operation type "DragEvent.ACTION_DRAG_ENDED" indicates that the user has released the thumbnail, and the dragging operation ends. When the OnDragListener object receives a dragging event whose operation type is "DragEvent.ACTION_DRAG_ENDED", it is determined that the dragging operation performed by the user on the draggable thumbnail image ends.

S520: The OnDragListener object queries whether the resource data carried by the draggable thumbnail image is processed; and if yes, performs S521; or if not, performs S522.

In an example, the OnDragListener object may query whether the resource data carried by the draggable thumbnail image is processed by using the dragEvent.getResult () method.

That the resource data carried by the draggable thumbnail image has been processed may be understood as the screenshot image or the screen recording video corresponding to the thumbnail view object has been transmitted to the target application or the service.

The situation in which the resource data carried by the draggable thumbnail image has not processed may include that the user drags the draggable thumbnail image to a range of a non-hotspot and releases the draggable thumbnail image, or may include that the user drags the draggable thumbnail image to the range of the hotspot of the target application, but the target application cannot respond to the data dragging and transmitting operation.

S521: The OnDragListener object destroys the thumbnail view object.

When the user releases the draggable thumbnail image and ends dragging the draggable thumbnail image, if the OnDragListener object finds that the data carried by the draggable thumbnail image has been processed, namely, the resource data is transmitted to the target application, the OnDragListener object destroys the thumbnail view object, and the process ends.

In an optional implementation, S521 may be adjusted as the follows. The OnDragListener object sends indication information used for instructing to destroy the thumbnail view object to the management module, and the management module destroys the thumbnail view object based on the indication information.

S522: The OnDragListener object cancels hiding the thumbnail view object, and restarts the automatic disappearance timing for the thumbnail view object.

When the user releases the draggable thumbnail image and ends dragging the draggable thumbnail image, if the OnDragListener object queries that the data carried by the draggable thumbnail image is not processed, namely, the resource data is not transmitted to the target application, the OnDragListener object triggers to display the thumbnail view object again, and restarts the automatic disappearance timing for the thumbnail view object.

When the OnLongClickListener object hides the thumbnail view object by setting the transparency, the OnDragListener object also cancels hiding the thumbnail view object by setting the transparency. For example, the OnDragListener object may set the transparency of the thumbnail view object to 1 by using a function setAlpha (1). In other words, the thumbnail view object is set to be in a non-transparent state.

When the OnLongClickListener object hides the thumbnail view object by setting the visibility, the OnDragListener object also cancels hiding the thumbnail view object by setting the visibility. For example, the OnDragListener object may set the visibility of the thumbnail view object to be visible by using the function setVisibility (View.VISIBLE).

When the OnLongClickListener object hides the thumbnail view object by setting the size of the thumbnail view object, the OnDragListener object also cancels hiding the thumbnail view object by resetting the size of the thumbnail view object. For example, the OnDragListener object may obtain the original size of the thumbnail view object recorded by the OnLongClickListener object, and invoke the updateViewLayout method provided by the window manager (WindowManager) to reset the size of the thumbnail view object to the original size.

In an optional implementation, S520 may be adjusted as the follows. The OnDragListener object sends indication information to the management module, where the indication information is used to instruct to cancel hiding the thumbnail view object, and restart automatic disappearance timing for the thumbnail view object. The management module cancels hiding the thumbnail view object based on the indication information, and restarts automatic disappearance timing for the thumbnail view object.

When the OnLongClickListener object hides the thumbnail view object by setting the transparency, the management module also cancels hiding the thumbnail view object by setting the transparency. When the OnLongClickListener object hides the thumbnail view object by setting the visibility, the management module also cancels hiding the thumbnail view object by setting the visibility. When the OnLongClickListener object hides the thumbnail view object by setting the size of the thumbnail view object, the management module also cancels the hiding the thumbnail view object by resetting the size of the thumbnail view object.

In this case, because the thumbnail view object is not destroyed, before the automatic disappearance timing of the thumbnail view object ends, the user may further trigger the data transmission process provided in embodiments of this application again through the touch and hold operation. For details, reference is made to S503 to S522. Details are not described herein.

In the solution provided in embodiments of this application, the user, by dragging the screenshot image thumbnail image or the screen recording video thumbnail image, can implement data transmission of the screenshot image or the screen recording video corresponding to the thumbnail image, which is convenient in operation, thereby improving use experience of a user.

In addition, embodiments of this application also consider the existing solution of thumbnail automatic disappearance timing, and restart the thumbnail automatic disappearance timing after thumbnail dragging is canceled. In addition, in embodiments of this application, the effect of "the original thumbnail being dragged" is implemented visually by hiding the thumbnail view object, which is significantly different from the visual experience where the user clearly perceives that the projection is dragged.

An embodiment further provides a computer storage medium. The computer storage medium stores a computer instruction. When the computer instruction is run on an electronic device, the electronic device is caused to perform the steps of the foregoing relevant method, to implement the data transmission method in the foregoing embodiments.

An embodiment further provides a computer program product. When the computer program product is run on a computer, the computer is caused to perform the foregoing relevant steps, to implement the data transmission method in the foregoing embodiments.

In addition, an embodiment of this application further provides an apparatus. The apparatus may be specifically a chip, a component, or a module. The apparatus may include a processor and a memory that are connected. The memory is configured to store a computer-executable instruction. When the apparatus runs, the processor may execute the computer-executable instruction stored in the memory, to cause the chip to perform the data transmission method in the foregoing method embodiments.

The electronic device, the computer storage medium, the computer program product, or the chip provided in embodiments of this application is configured to perform the corresponding methods provided above. Therefore, for beneficial effect that can be achieved, reference is made to the beneficial effect of the corresponding method provided above. Details are not described herein again.

According to the foregoing descriptions of the implementations, a person skilled in the art may understand that for a purpose of convenient and brief description, division into the foregoing functional modules is merely used as an example for illustration. During actual application, the foregoing functions may be allocated to different functional modules for implementation based on a requirement. In other words, an inner structure of an apparatus is divided into different functional modules to implement all or some of the functions described above.

In embodiments provided in this application, it should be understood that the disclosed apparatus and method may be implemented in another manner. For example, the described apparatus embodiment is merely an example. For example, the module or unit division is merely logical function division and may be another division in actual implementation. For example, a plurality of units or components may be combined or integrated into another apparatus, or some features may be ignored or not performed. In addition, the displayed or discussed mutual coupling or direct coupling or communication connection may be implemented through some interfaces. The indirect coupling or communication connection between the apparatuses or units may be implemented in an electronic, mechanical, or another form.

The units described as separate parts may or may not be physically separated. A part displayed as a unit may be one physical unit or a plurality of physical units, located at the one position, or may be distributed to different positions. Some or all of the units may be selected based on an actual need to achieve the objectives of the solutions of embodiments.

In addition, functional units in embodiments of this application may be integrated into one processing unit, or each of the units may be physically separated, or two or more of the units may be integrated into one unit. The integrated unit may be implemented in a form of hardware, or may be implemented in a form of a software function unit.

Both any content of embodiments of this application and any content of a same embodiment may be freely combined. Any combination of the foregoing content falls into the scope of this application.

When the integrated unit is implemented in the form of a software function unit and is sold or used as an independent product, the integrated unit may be stored in a readable storage medium. Based on such an understanding, the technical solutions in embodiments of this application essentially, or the part contributing to the prior art, or all or some of the technical solutions may be implemented in a form of a software product. The software product is stored in a storage medium and includes instructions for enabling a device (which may be a single-chip microcomputer, a chip, or the like) or a processor (processor) to perform all or some of the steps of the methods described in embodiments of this application. The foregoing storage medium includes any medium that may store program code, such as a USB flash drive, a removable hard disk, a read only memory (read only memory, ROM), a random access memory (random access memory, RAM), a magnetic disk, or a compact disc.

Although embodiments of this application are described above with reference to the accompanying drawings, this application is not limited to the specific embodiments described above. The foregoing specific embodiments are illustrative but not restrictive. With the enlightenment of this application, a person of ordinary skill in the art may make many forms without departing from the concept of this application and the protection scope of the claims. These forms fall into the protection of this application.

Steps of the methods or algorithms described in combination with the content disclosed in embodiments of this application may be implemented by hardware, or may be implemented by a processor by executing a software instruction. The software instruction may be composed of a corresponding software module, and the software module may be stored in a random access memory (Random Access Memory, RAM), a flash memory, a read only memory (Read Only Memory, ROM), an erasable programmable ROM (Erasable Programmable ROM, EPROM), an electrically EPROM (Electrically EPROM, EEPROM), a register, a hard disk, a removable hard disk, a compact disc read-only memory (CD-ROM), or a storage medium in any other forms well-known in the art. An example storage medium is coupled to a processor, so that the processor can read information from the storage medium or write information into the storage medium. Certainly, the storage medium may be a component of the processor. The processor and the storage medium may be located in an ASIC.

A person skilled in the art may be aware that in the foregoing one or more examples, the functions in embodiments of this application may be implemented by hardware, software, firmware, or any combination thereof. When implemented by using software, the functions may be stored in a computer-readable medium or may be used as one or more instructions or code in a computer-readable medium for transmission. The computer-readable medium includes a computer storage medium and a communication medium, where the communication medium includes any medium that facilitates transfer of a computer program from one place to another. The storage medium may be any available medium accessible to a general-purpose or dedicated computer.

Although embodiments of this application are described above with reference to the accompanying drawings, this application is not limited to the specific embodiments described above. The foregoing specific embodiments are illustrative but not restrictive. With the enlightenment of this application, a person of ordinary skill in the art may make many forms without departing from the concept of this application and the protection scope of the claims. These forms fall into the protection of this application.

## Claims

1. A data transmission method, comprising:
displaying a first thumbnail corresponding to a screenshot image or a screen recording video at a first position in response to a first operation;
creating a second thumbnail at the first position in response to a second operation performed on the first thumbnail, and hiding the first thumbnail, wherein the second thumbnail and the first thumbnail have a same image picture, and the second thumbnail is a draggable image;
moving the second thumbnail with a hand in response to movement of a third operation, wherein the third operation is performed on the second thumbnail, and the third operation is a dragging operation continuous with the second operation; and
dragging the second thumbnail to a first region in response to the third operation and then releasing the second thumbnail, transmitting the screenshot image or the screen recording video corresponding to the first thumbnail to a first service, and skipping displaying the first thumbnail and the second thumbnail, wherein the first region is a hotspot corresponding to the first service.

2. The method according to claim 1, wherein the first service is a service that allows receiving the screenshot image or the screen recording video.

3. The method according to claim 1, further comprising:
dragging the second thumbnail to a second region in response to the third operation and then releasing the second thumbnail, moving the second thumbnail to the first position and skipping displaying the second thumbnail, and redisplaying the first thumbnail, wherein
the second region is a region corresponding to a second service, the second service is a service that does not allow receiving the screenshot image or the screen recording video, or the second region is a non-hotspot.

4. The method according to claim 1, wherein the dragging the second thumbnail to a first region and then releasing the second thumbnail and skipping displaying the first thumbnail comprises:
monitoring a first dragging event on the second thumbnail, wherein an operation type of the first dragging event is a dragging end; and
skipping displaying the first thumbnail when it is found that the screenshot image or the screen recording video has been transmitted and processed.

5. The method according to claim 3, wherein the dragging the second thumbnail to a second region and then releasing the second thumbnail and displaying the first thumbnail comprises:
monitoring a second dragging event on the second thumbnail, wherein an operation type of the second dragging event is a dragging end; and
redisplaying the first thumbnail when it is found that the screenshot image or the screen recording video has not been transmitted and processed.

6. The method according to claim 1, wherein the hiding the first thumbnail comprises:
recording an original size of the first thumbnail, and resetting the size of the first thumbnail to 0; or
setting the first thumbnail to be fully transparent; or
setting visibility of the first thumbnail to invisible.

7. The method according to claim 1, further comprising:
generating a target picture frame at the first position in response to the second operation, wherein the target picture frame is configured to indicate a dragging start region of the second thumbnail;
dragging the second thumbnail to a third region in response to the third operation, and hiding the target picture frame, wherein when the second thumbnail is located in the third region, no intersection set exists between the second thumbnail and the target picture frame; and
dragging the second thumbnail to a fourth region in response to the third operation, and displaying the target picture frame, wherein when the second thumbnail is located in the fourth region, an intersection set exists between the second thumbnail and the target picture frame.

8. The method according to claim 7, further comprising:
dragging the second thumbnail to the fourth region in response to the third operation and then releasing the second thumbnail, moving the second thumbnail to the first position and skipping displaying the second thumbnail, and redisplaying the first thumbnail.

9. The method according to claim 8, wherein the dragging the second thumbnail to the fourth region in response to the third operation and then releasing the second thumbnail, and redisplaying the first thumbnail comprises:
monitoring a third dragging event on the second thumbnail, wherein an operation type of the third dragging event is a dragging end; and
redisplaying the first thumbnail when it is found that the screenshot image or the screen recording video has not been transmitted and processed.

10. The method according to claim 7, wherein the dragging the second thumbnail to a third region in response to the third operation, and hiding the target picture frame comprises:
monitoring a fourth dragging event on the second thumbnail, and setting the target picture frame to be fully transparent, wherein an operation type of the fourth dragging event is leaving a picture frame region; and
the dragging the second thumbnail to a fourth region, and displaying the target picture frame comprises:
monitoring a fifth dragging event on the second thumbnail, and setting the target picture frame to be non-fully transparent, wherein an operation type of the fifth dragging event is entering a picture frame region.

11. The method according to any one of claims 1 to 10, wherein after the displaying a first thumbnail corresponding to a screenshot image or a screen recording video at a first position, the method further comprises:
starting target timing for the first thumbnail, wherein the target timing is used to trigger non-display the first thumbnail when a timing duration reaches a preset duration; and
monitoring a sixth dragging event on the second thumbnail, and canceling the target timing for the first thumbnail, wherein
an operation type of the sixth dragging event is a dragging start.

12. The method according to claim 11, wherein after the redisplaying the first thumbnail, the method further comprises: restarting the target timing for the first thumbnail.

13. The method according to claim 1, wherein after creating a second thumbnail at the first position, the method further comprises:
moving the second thumbnail from the first position to a second position based on a position of the second operation, wherein
when the second thumbnail is located in the second position, the position of the second operation is located in a central region of the second thumbnail.

14. An electronic device, comprising a memory and a processor, wherein the processor is coupled to the memory, the memory stores a program instruction, and the program instruction, when executed by the processor, causes the electronic device to perform the data transmission method according to any one of claims 1 to 13.

15. A computer-readable storage medium, comprising a computer program, wherein the computer program, when run on an electronic device, causes the electronic device to perform the data transmission method according to any one of claims 1 to 13.
